# EUROPEAN PATENT APPLICATION

(11) **EP 0 751 683 A2**
(43) Date of publication of application: **02.01.1997**
(21) Application number: 96110611.9
(22) Date of filing: 01.07.1996
(51) Int. Cl.: H04N 5/74, H04N 3/15, H04N 9/31, H04N 9/30

(54) **Image processing apparatus, image display apparatus and image sensing apparatus**

(30) Priority: 30.06.1995 JP 188087/95; 30.09.1995 JP 276736/95; 30.09.1995 JP 276737/95; 21.03.1996 JP 91982/96
(71) Applicant: VICTOR COMPANY OF JAPAN LIMITED, Yokohama-Shi Kanagawa-Ken (JP)
(72) Inventor: Takanashi, Itsuo, Kamakura-shi, Kanagawa-ken (JP); Nakagaki, Shintaro, Miura-shi, Kanagawa-ken (JP); Asakura, Tsutou, Osawara-shi, Kanagawa-ken (JP); Yamazaki, Tetsuhiro, Yokohama-shi, Kanagawa-ken (JP); Miyoshi, Tadayoshi, Miura-shi, Kanagawa-ken (JP); Doi, Keiichiro, Yokohama-shi, Kanagawa-ken (JP); Eguchi, Toshiyasu, Tsukuba-shi, Ibaraki-ken (JP); Takenaka, Hiromitsu, Kamakura-shi, Kanagawa-ken (JP); Mori, Yasuhiro, Yokohama-shi, Kanagawa-ken (JP); Furuya, Masato, Yokosuka-shi, Kanagawa-ken (JP)
(74) Representative: Geyer, Ulrich F., Dr. Dipl.-Phys.

(57) **Abstract**

An image display apparatus capable of displaying an image having a high resolution on a screen without employing plural display devices is provided. The image display apparatus includes a display device having a plurality of picture elements disposed in a matrix state for displaying a picture responsive to a picture signal supplied thereto, a polarizing device for selectively changing a plane of polarization of a light of the picture displayed by the display device and a birefringence device for causing birefringence in the light outputted from the polarizing device. The display device, the polarizing device and the birefringence device are disposed in this order along a path of the light.

## Description

### BACKGROUND OF THE INVENTION

### Field of the Invention:

This invention relates to improvements of an image processing apparatus, an image display apparatus and an image sensing apparatus.

### Description of the Related Arts:

Generally, as an image display device replacing a CRT (cathode ray tube), a liquid crystal display device (referred to as LCD hereinafter) has been appreciated and has been widely used for various purposes because of its small size and a low power consumption.

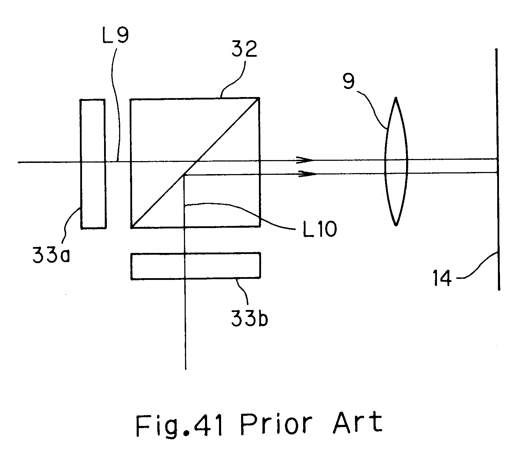

Fig. 41 is a schematic view of an exemplary construction of a conceivable image display apparatus in the prior art.

In Fig. 41, a reference numeral 9 denotes a projection lens, 32 a beam splitter, 33a a first transmission type liquid crystal display device having a plurality of picture elements in a matrix configuration and 33b a second transmission type liquid crystal device having a plurality of picture elements in a matrix.

As shown in Fig. 41, the first and second transmission type liquid crystal display devices 33a, 33b are respectively disposed to face in different directions intersecting at a right angle to each other.

A positional relation between the picture elements of the first transmission type liquid crystal display device 33a and the picture elements of the second one 33b is that horizontal alignment of their picture elements is vertically shifted each other by one half pitch of picture element configuration, this picture is so called a picture element shifting method.

The projection lens 9 is disposed between the beam splitter 32 and a screen 14 so that a light beam selectively outputted from the beam splitter 32 is projected on the screen 14.

Next, a description is given of the reason why the displayed image has a high resolution on the screen 14 of the image display device in the picture element shifting method.

Information lights L9, L10 read out from the first and second transmission type liquid crystal device 33a, 33b, carry respectively an odd number-th field picture (referred to as an odd field picture hereinafter) and an even number-th field picture (referred to as an even field picture), and are respectively inputted to the beam splitter 32. Then, the information lights L9, L10 are respectively projected on the screen 14 to form a composite image through the beam splitter 32 and the projection lens 9.

Thus, an image having a high resolution is obtained because of the effect of the picture element shifting method.

Specifically, the odd field picture is projected on the screen at a position corresponding to odd numbered (2n-1, n=1, 2, 3··· ) horizontal lines (referred to as odd lines). On the other hand, as the picture elements are preliminarily shifted by 1/2 of a picture element pitch in a column direction in the matrix in the second transmission type liquid crystal device 33b, the even field picture is projected on the screen at a position corresponding to even numbered (2n, n=1, 2, 3··· ) horizontal lines (referred to as even lines hereinafter) by being shifted at 1/2 of a picture element pitch from the odd field picture in a lower direction (i.e., each line being interposed between the adjacent odd lines in vertical direction), resulting in an displayed image having a double resolution.

In an image sensing apparatus, a pair of image sensing devices is employed instead of the transmission type liquid crystal display devices 33a, 33b to obtain a high resolution image in the same manner as mentioned in the foregoing, by separating the images obtained by the pair of image sensing devices to the odd field picture and the even field picture, and by composing them to an image electrically.

The picture element shifting method is well known to obtain an image having a high resolution by using the image sensing devices or the image display devices each having less picture elements.

As a stereographic display apparatus (3-dimensional image display apparatus), there is one employing a plurality of lenticular lenses, wherein image signals for right and left eyes of an observer are simultaneously displayed on two display devices composed of picture elements corresponding to the two signals. As another example, the both image signals for the right and left eyes are alternatively switched correspondingly with an open and close spectacle operation.

The liquid crystal display device is composed of plural picture elements, for instance, orderly disposed in a matrix in a line direction and in a column direction.

Upon an operation of the liquid crystal device, the plural picture elements are operated so as to display an image thereon in such a manner that picture signals sampled by a sampling clock signal are sequentially inputted to each of the picture elements disposed in a horizontal direction and, at the same time, vertical scanning signal is applied to the corresponding line by scanning for a predetermined period so as to activate the picture elements at every line as mentioned hereinafter.

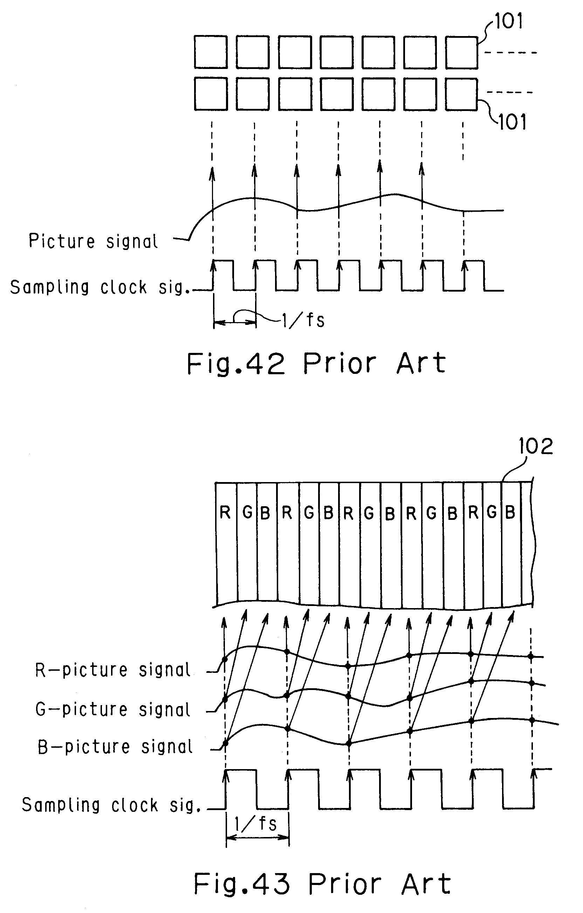

Fig. 42 is a schematic view for explaining a sampling principle in the prior art.

As shown in Fig. 42, the picture signal is sampled by using a sampling clock signal having a frequency of fₛ, and the sampled signals are sequentially inputted to the picture elements 101 of the liquid crystal device at every line. Thus, a picture is displayed thereon.

Fig. 43 is a schematic view for explaining a sampling principle in a color display in the prior art.

As shown in Fig. 43, in the case of a color display, there is employed a plurality of RGB stripe filters 102 each comprised of a group of RGB (red, green and blue) colors aligned to columns of picture elements. Each of the RGB picture signals is sampled by the sampling clock signal, and the sampled signal values are written in the picture elements corresponding to the stripe filters 102, resulting in a colored picture displayed thereon.

As mentioned above, the picture elements (not shown) are disposed correspondingly with the RGB stripe filters 102 in Fig. 43.

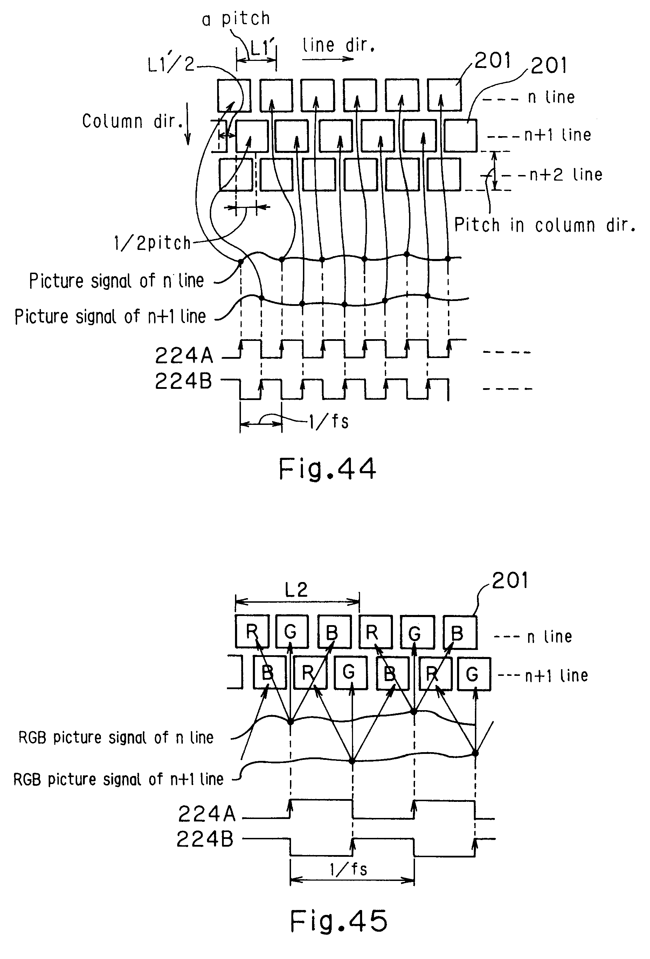

Fig. 44 is a schematic view showing picture elements disposed on an LCD (liquid crystal display device) and the sampled status of the picture signal in the prior art, wherein the picture elements are regularly disposed in a matrix having a plurality of lines in a horizontal direction and a plurality of columns in a vertical direction.

Each of the picture elements in the (n+1)-th (n: a natural number) line of picture is aligned with a pitch of L1 and is shifted in the line direction or in the horizontal direction by L1/2 pitch from each of the picture elements disposed in the n-th line of picture, thus the matrix forms a "delta matrix".

The picture signal is converted into a plurality of sampled signals by a sampling clock signal having a frequency of fₛ, and the sampled picture signals are respectively inputted to the corresponding picture elements 201 to be displayed.

Specifically, the n-th line picture signal corresponding to the n-th line of picture is sampled by a first sampling clock signal and is sequentially inputted to the picture elements 201 disposed in the n-th line of picture. A (n+1)th line picture signal corresponding to the (n+1)-th line is sampled by a second sampling clock signal which is 180° out of phase from that of the first sampling clock signal or original signal, and is sequentially inputted to the picture elements 201 disposed in the (n+1)-th line of picture.

Fig. 45 is a diagram showing the picture elements and the sampling status of the picture signal in a single LCD for displaying a color picture in the prior art, wherein the picture elements 201 are aligned in the line direction and assigned respectively to three primary colors, R (read), G (green) and B (blue) which are repeated in this order. Further, picture elements 201 are staggered at every other line with a shifted distance of L2/2, where L2 is a pitch of R, G, B groups.

In this case, the *n*-th line RGB picture signal (in Fig. 45 three signals of RGB are depicted together as a composite signal) is sampled by a first sampling clock signal and is inputted to the RGB picture elements 201 in the *n*-th line. The (*n+1*)-th line RGB picture signal is sampled by a second sampling clock signal which is 180° out of the phase of the n-th line RGB picture signal, and is inputted to the RGB picture elements 201 in the (*n+1*)-th line.

In the image display apparatus shown in Fig. 41, it requires a plurality of the transmission type liquid crystal display devices correspondingly with an increase of resolution of the displayed image, resulting in a large-sized apparatus. This poses a problem of increase of production cost of the apparatus.

In the method shown in Figs. 42 and 43, the resolution limit of a picture displayed is determined by the sampling clock signal frequency fs. Thus, a higher resolution than this resolution limit can not be expected. In order to increase the resolution, it requires to increase the number of the picture elements 101 and the group number of the stripe filters 102 and the sampling frequency of the picture signal. In order to improve the resolution in the given device size, it requires to cause the stripe filters 102 and the picture elements 101 to have microstructures. This poses a problem of high production cost of the device and the driving circuits because of a degradation of the yield rate in the production process and an increase of the sampling frequency.

In the method shown in Figs. 44 and 45, for instance, the (*n+1*)-th line picture signal is sampled by using the sampling clock signal which is 180° out of the phase of adjacent line picture signals, i.e., (n)-th and (n-2)-th line picture signals, and is displayed as picture elements in the (*n+1*)-th line interposed between the adjacent lines.

This poses a problem that there appears a minute outline around a displayed image of each of the picture elements, resulting in an unnatural and poor image as a whole. Particularly, when the total number of the picture elements is smaller, it was impossible to prevent the degradation of the image quality, i.e., an unnatural and poor image because of stepwise zigzag lines appeared in a slant direction as a whole.

### SUMMARY OF THE INVENTION

Accordingly, a general object of the present invention is to provide an image display device in which the above disadvantages have been eliminated.

A specific object of the present invention is to provide an image display apparatus comprising: picture display means having a plurality of picture elements disposed in a matrix state for displaying a picture responsive to a picture signal supplied thereto; polarizing means for selectively changing a plane of polarization of a light of the picture displayed by the picture display means; and birefringence means for causing birefringence in the light outputted from the polarizing means, wherein the picture display means, the polarizing means and the birefringence means are disposed in this order along a path of a light.

A more specific object of the present invention is to provide an image display apparatus comprising: liquid crystal picture display means having a plurality of picture elements disposed in a matrix state for displaying a picture responsive to a picture signal supplied thereto; vertical scanning signal driving means for sequentially applying a vertical scanning signal to each of the plurality of picture elements; horizontal scanning signal driving means for sequentially applying a picture signal synchronized with a horizontal scanning signal to each of the plurality of picture elements; polarizing means for selectively changing a plane of polarization of a light of the picture displayed by the liquid crystal picture display means; and birefringence means for causing birefringence in the light outputted from the polarizing means, wherein the liquid crystal picture display means, the polarizing means and the birefringence means are disposed in this order along a path of a light.

Another and more specific object of the present invention is to provide an image display apparatus comprising: liquid crystal picture display means having a plurality of picture elements disposed in a matrix state for displaying a picture responsive to a picture signal supplied thereto; vertical scanning signal driving means for sequentially applying a vertical scanning signal to each of the plurality of picture elements; horizontal scanning signal driving means for sequentially applying a picture signal synchronized with a horizontal scanning signal to each of the plurality of picture elements; polarizing means for selectively changing a plane of polarization of a light of the picture displayed by the liquid crystal picture display means; and image processing means comprising a beam splitter for causing a P-polarized light of an inputted light to pass through and reflecting an S-polarized light thereof, reflecting means for reflecting the P-polarized light and the S-polarized light from the beam splitter, and polarizing means for respectively converting the S-polarized light and the P-polarized light reflected by the reflecting means to the P-polarized light and the S-polarized light, and directing thus converted P and S polarized lights to the beam splitter, wherein the liquid crystal picture display means, the polarizing means and the birefringence means are disposed in this order along a path of the light.

Another and more specific object of the present invention is to provide an image display apparatus having liquid crystal picture display means having a plurality of picture elements in a matrix form aligned straight in both line and column directions for displaying a picture responsive to a picture signal supplied thereto, vertical scanning signal driving means for sequentially applying a vertical scanning signal to each of the plurality of picture elements and horizontal scanning signal driving means for sequentially applying to the plurality of picture elements a picture signal sampled at a rate which corresponds to picture elements disposed in the line direction, the image display apparatus comprising: sampling clock generating means for generating first and second sampling clock signals which are 180° out of phase to each other; sampling clock switching means for selectively switching the first and second sampling clock signals and applying one of the first and second sampling clock signals to the horizontal scanning signal driving means, and switching control means for controlling the sampling clock switching means so as to switch the first and second sampling clock signals at a predetermined repetition rate, wherein the picture display means, the polarizing means and the image processing means are disposed in this order along a path of the light.

Another and more specific object of the present invention is to provide an image processing device having liquid crystal picture display means having a plurality of picture elements in a matrix form aligned straight in both in line and column directions and a plurality of RGB color filters correspondingly provided to the plurality of picture elements, and vertical scanning signal driving means for sequentially applying a vertical scanning signal to each of the plurality of picture elements and horizontal scanning signal driving means for sequentially applying to the plurality of picture elements a picture signal sampled at a rate which corresponds to picture elements disposed in the line direction, the image processing device comprising: sampling clock generating means for generating first and second sampling clock signals which are 180° out of phase therebetween; sampling clock switching means for selectively switching the first and second sampling clock signals and applying one of the first and second sampling clock signals to the horizontal scanning signal driving means, and switching control means for controlling the sampling clock switching means so as to switch the first and second clock sampling clock signals at a predetermined repetition rate.

Another and more specific object of the present invention is to provide an image sensing apparatus comprising: image sensing means for sensing an image; birefringence means for causing birefringence in a light inputted to the image sensing means; and polarizing means for selectively changing a plane of polarization of a light of the image inputted to the birefringence means, wherein the polarizing means and the birefringence means and the image sensing means are disposed in this order along a path of the light.

Another and more specific object of the present invention is to provide an image display apparatus comprising: a display device having a plurality of picture elements in a matrix form aligned straight in both line and column directions; a rotary disc in which a plural through holes are defined along a periphery of the rotary disc, a first flat glass plate provided at least in one of the through holes for refracting an information light inputted to the rotary disc from the display device; and a second flat glass plate provided at least in another the through holes for allowing to pass the information light inputted to the rotary disc without any refraction.

Another and more specific object of the present invention is to provide an image display apparatus comprising: a display device having a plurality of picture elements in a matrix form aligned straight in both line and column directions; a plain glass plate for allowing to pass an information light inputted thereto from the display device without causing any refraction; and a piezoelectric element for inclining the plain glass plate so as to refract the information light.

Another and more specific object of the present invention is to provide an image display apparatus comprising: first and second transmitting type display devices for respectively modulating first and second lights inputted thereto; first and second polarizing means for selectively and respectively polarizing a polarization plane of the first and second lights outputted from the first and second transmitting type display devices; and a polarizing beam splitter for passing a P-polarized components of the first and second lights respectively and for reflecting S-polarized components of the first and second light, respectively, the first and second lights being incident on the polarization beam splitter from different directions each other making a right angle there between.

Other objects and further features of the present invention will be apparent from the following detailed description.

### BRIEF DESCRIPTION OF DRAWINGS

Fig. 1 is a side view for explaining a principle of an image display apparatus in a first embodiment of the present invention;
Fig. 2 is a side view for explaining a principle of an image sensing apparatus in a second embodiment of the present invention;
Figs. 3(A) and 3(B) are schematic views for explaining a principle of the image display apparatus in the third embodiment of the present invention;
Figs. 4(A), 4(C) 4(D) and 4(E) are schematic views showing various kinds of polarization conversion devices, and Fig. 4(B) is a partial side view of a polarization conversion device shown in Fig. 4(A);
Fig. 5 is a schematic view showing a construction of a reflective type display apparatus in the fourth embodiment of the present invention;
Fig. 6 is a schematic view showing a construction of a transmission type display apparatus in a fifth embodiment of the present invention;
Fig. 7 is a plan view showing a high resolution displayed image having a double density on the screen by shifting an even field picture in a vertical direction;
Fig. 8 is a plan view showing a high resolution displayed image having a double density on the screen by shifting the even field picture in a horizontal direction;
Fig. 9(A) is a table showing relations between combinations of phase shifts caused by first and second polarization conversion devices and picture elements displayed on the screen, wherein each of the characters "d", "e", "f" and "g" denotes picture elements of a picture displayed on the screen corresponding to a combination of the phase shifts;
Fig. 9(B) is a partial enlarged plan view showing an arrangement of picture elements of four kinds of pictures displayed on the screen shown in Fig. 9(A);
Fig. 10 is a schematic view showing an image display apparatus employing a combination of first and second polarization conversion devices and a combination of first and second birefringence plates in a sixth embodiment of the present invention;
Fig. 11(A) is a schematic view showing a construction of a 3-dimensional type display apparatus of the present invention;
Fig. 11(B) is a perspective view showing an ordinary ray and an extraordinary ray going in different directions each other through a lenticular lens plate;
Figs. 12(A) to 12(C) are schematic views for explaining a construction of another 3-dimensional type display apparatus in the present invention;
Figs. 13(A) and 13(B) are perspective views for explaining a principle of a 90° TN type polarization conversion device of the present invention;
Fig. 14(A) is a perspective view for explaining a relation between a phase change and a plane of polarization of a light in a polarization conversion device utilizing a birefringence;
Fig. 14(B) is a plan view for explaining a relation between the linearly polarized inputted light through the polarizer and the outputted light;
Figs. 15(A) to 15(C) show diagrams for explaining a switching timing relation between the signal switching of the display device and the switching timing of the polarizing in the polarization conversion device;
Fig. 16 is a block diagram of the ninth embodiment in the present invention of a display device as a picture processing device used in the present invention;
Fig. 17 is a schematic view showing picture elements of the display device shown in Fig. 16 and sampling status of a picture signal;
Fig. 18 is a timing chart for explaining a relation between a vertical sync signal of the display device shown in Fig. 16 and two kinds of sampling clock signals;
Fig. 19 is a timing chart for explaining another relation between a vertical sync signal of the display device shown in Fig. 16 and two kinds of sampling clock signals;
Fig. 20 is a graph showing a relation between a spatial frequency and an MTF (Modulation Transfer Function);
Fig. 21 is a perspective view showing an image displaying apparatus employing the display device shown in Fig. 16;
Fig. 22 is a block diagram of a tenth embodiment in the present inventin of a display device as a picture processing device used in the present invention;
Fig. 23 is a schematic view showing picture elements of the display device shown in Fig. 22 and sampling status of a picture signal;
Fig. 24 is a partial block diagram for shifting the sampling positions of the RGB picture signals from each other at 120° in phase;
Fig. 25 is a schematic view showing RGB picture elements of the display device shown in Fig. 24 and sampling status of RGB picture signals;
Fig. 26 is a plan view showing another type RGB filter;
Fig. 27 is a perspective view showing an image display apparatus employing the display device for color pictures;
Fig. 28 is a schematic view for explaining an operation of the image display apparatus shown in Fig. 27;
Fig. 29 is a perspective view showing a modification of the embodiment of the image display apparatus shown in Fig. 27;
Fig. 30 is a schematic view for explaining an operation of the image display apparatus shown in Fig. 29;
Fig. 31 is a schematic view of another modification of the image display apparatus employing another modification of the display device as a picture processing device;
Fig. 32 is a block diagram of the display device as the image processing device shown in Fig. 31;
Fig. 33 is a timing chart for explaining an operation of the display device shown in Figs. 31, and 32;
Fig. 34 is a schematic view for explaining the operation of the image display apparatus of the ninth embodiment of the present invention shown in Fig. 31;
Fig. 35 is a schematic view showing the overlaid state of an ordinary ray and an extraordinary ray;
Figs. 36 (A) and 36(B) are schematic diagrams for further explaining in detail the shifted state of the images shown in Fig. 35;
Fig. 37 is a block diagram of a display device as a picture processing device for a color picture in the present invention;
Figs. 38(A) and 38(B) are schematic views showing a status of a picture shifting in a color presentation.
Fig. 39(A) is a schematic view of another embodiment of the RGB filter;
Fig. 39(B) is a schematic view for explaining an operation of another embodiment of the RGB filter shown in Fig. 39(A);
Fig. 40 is a schematic view showing picture elements each having a diamond shape and a RGB filter having the corresponding diamond shape;
Fig. 41 is a schematic view of an exemplary construction of a conceivable image display apparatus in a prior art;
Fig. 42 is a schematic view for explaining a sampling principle in a prior art;
Fig. 43 is a schematic view for explaining a sampling principle in a color presentation in a prior art;
Fig. 44 is a schematic view showing picture elements disposed on an LCD and a sampled status of the picture signal in a prior art; and
Fig. 45 is a diagram showing the picture elements and the sampling status of a picture signal in a single LCD for displaying a color picture in a prior art.

### DETAILED DESCRIPTION OF THE PREFERRED EMBODIMENTS

The description is given to embodiments of image display apparatuses and image sensing apparatuses referring to attached drawings.

### [First embodiment of the present invention as an image display apparatus]

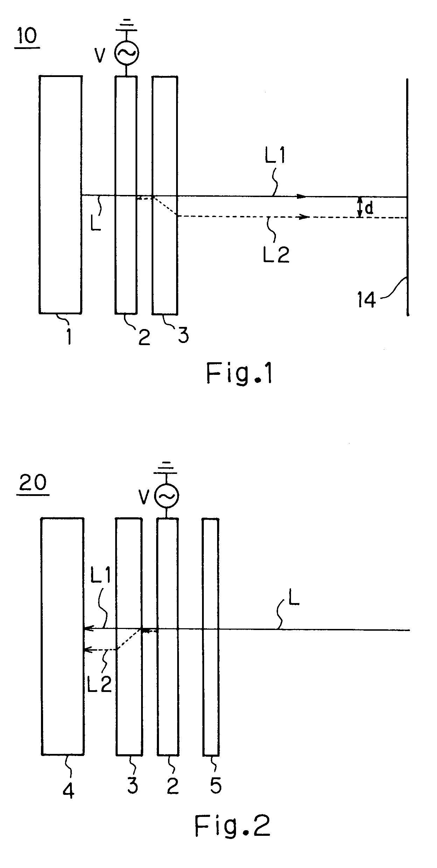

First, the explanation is given of an image display apparatus in a first embodiment of the present invention capable of displaying an image having a high resolution on a screen referring to Fig. 1.

Fig. 1 is a side view for explaining the principle of an image display apparatus in the first embodiment of the present invention.

In Fig. 1, a reference character 10 denotes an image display apparatus of the first embodiment, 1 a display device having a plurality of picture elements in a matrix as an image display means, 2 a polarization conversion device as a polarization conversion means, 3 a birefringence plate as a birefringence means, and 14 a screen.

The image display apparatus 10 comprises the display device 1 for supplying picture information light beams, the polarization conversion device 2 for converting a plane of polarization of the light from the display device 1 and the birefringence plate 3 by which the inputted polarized light undergoes a birefringence effect .

As the polarization conversion device 2 employing a liquid crystal, for instance, a twisted nematic mode liquid crystal panel type device, a birefringence electric field effect mode liquid crystal panel type device and a smectic mode liquid crystal panel type device are available.

As the polarization conversion device 2 employing a piezoelectric material, for instance, a lead zirconate titanate (PZT) type device is available.

Next, the description is given of some examples of the structure of the polarization conversion device 2 and a principle thereof to convert a plane of polarization of a light.

Generally, as the polarization conversion device 2, there are two types, i.e., one utilizing optical rotary polarization and the other utilizing birefringence.

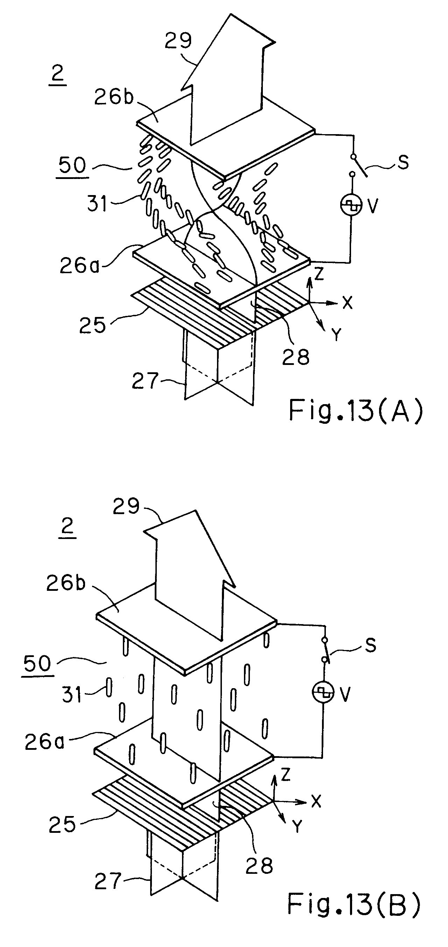

As the polarization conversion device 2 utilizing the optical rotary polarization, there is a 90° TN (twisted nematic) type device, wherein the plane of polarization of a light is rotated along a liquid crystal axis as shown in Fig. 13(A).

Figs. 13(A) and 13(B) are perspective views for explaining the principle of a 90° TN type polarization conversion device of the present invention, wherein Fig. 13(A) shows 90°-rotation of the plane of polarization of the light when an AC power source V is not applied and Fig. 13(B) shows none-rotation of the plane of polarization thereof when the AC power source V is applied.

Specifically, the polarization conversion device 2 comprises first and second transparent glass electrodes (referred to as transparent electrodes) 26a, 26b, a liquid crystal 50 interposed between the first and second transparent electrodes 25a and 25b, the AC power source V connected to the first and second transparent electrodes 26a, 26b through a switch S to apply an AC voltage to the liquid crystal 50, and a polarizer 25 disposed before the first transparent electrode 26a for polarizing an inputted light 27 thereto.

When the AC voltage is not applied to the liquid crystal 50 as shown in Fig. 13(A), liquid crystal molecules 31 are disposed in such a manner that the molecules nearby the first and second transparent electrodes 26a and 26b are disposed to be perpendicular to each other. In this state, the inputted light 28 linearly polarized by the polarizer 25 advances along the liquid crystal molecules 31. Thus, the outputted light 29 from the second transparent electrode 26b is obtained as a light having a plane of polarization rotated by 90° compared with the inputted light 28 linearly polarized by the polarizer 25.

On the other hand, when the AC voltage is applied to the liquid crystal 50 as shown in Fig. 13(B), the liquid crystal molecules 31 are linearly aligned in a direction of the transparent electrodes 26a, 26b. Thus, the outputted light 29 is obtained as the same polarized light as the inputted light 28 linearly polarized by the polarizer 25.

Next, the description is given of the polarization conversion device 2 utilizing a birefringence.

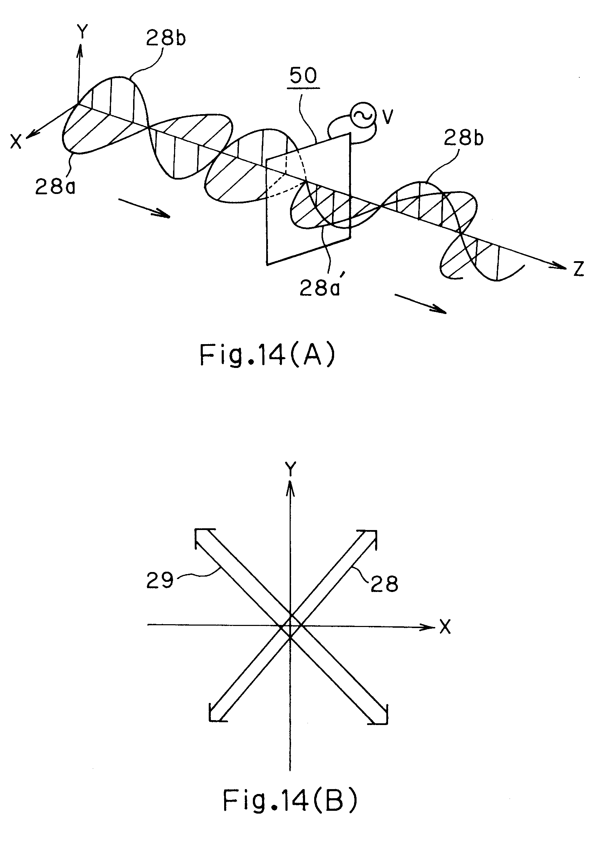

Fig. 14(A) is a perspective view for explaining a relation between a phase change and a plane of polarization of a light in a polarization conversion device utilizing the birefringence.

Fig. 14(B) is a plan view of the schematic shown in Fig. 14(A) for explaining a relation between the linearly polarized inputted light through the polarizer and the outputted light.

The linearly polarized light 28 impinging on a liquid crystal layer 50 undergoes a change of phase corresponding to the product of the refractive index anisotropy and a thickness of the liquid crystal layer 50.

In Fig. 14(A), the "Z" axis is defined as a propagation direction of the inputted light 27, and the "X" axis is defined in a plane perpendicular to the "Z" axis so as to intersect a line parallel to the polarizing direction of the polarizer 25 which is shown in Figs. 13 (A) and 13(B) at an angle of 45° , and the "Y" axis is defined to intersect the "X" axis at the right angle.

Accordingly, the linearly polarized light 28 passing through the polarizer 25 has a declined plane of polarization at 45° to the "X" axis in the X-Y plane as shown in Fig. 14(B) of which the schematic of Fig. 14(A) is viewed toward the propagation direction, and propagates in the "Z" axis direction as oscillating, and impinges on the liquid crystal layer 50.

When a component in a oscillating direction of the linearly polarized light 28 is divided into two components, i.e., an "X" component 28a and a "Y" component 28b, one of them undergoes a change of phase relatively because of the refractive index anisotropy of the liquid crystal layer 50. For instance, when the "X" component 28a relatively undergoes a change of phase at λ/2 to the "Y" component 28b by the liquid crystal layer 50, the "X" component 28a is represented as an "X" component 28a' in Fig. 14(A).

Thus, it is possible to obtain the outputted light 29 having the polarized plane rotated by 90° compared with that of the linearly polarized light 28 by adding the "X" component 28 a' and the "Y" component 28b together.

Further, a degree of the rotated component of the linearly polarized light 28 is changeable corresponding to the value of the voltage V applied to the liquid crystal layer 50. Thus, the polarized plane of the outputted light 29 can be optionally changed. Needless to say, the polarizer 25 is unnecessary when the inputted light 27 is already a linearly polarized light.

Next, an operational principle of the image display apparatus 10 is explained about the case where the polarization conversion device 2 employs the liquid crystal layer 50 having the birefringence.

In the state where the voltage "V" is not applied to the polarization conversion device 2, a reading light (not shown) impinges on the display device 1. Then, an information light L carrying information is read out from the display device 1. When the information light L corresponding to an odd field picture obtained therefrom impinges on the polarization conversion device 2, it is outputted therefrom without any polarization change and is inputted to the birefringence plate 3. This information light L behaves as an ordinary ray L1 when it passes through birefringence plate 3.

Thus, the ordinary ray L1 goes straight through the birefringence plate 3 without being refracted, and is displayed on the screen 14.

In the state where the voltage "V" is applied to the polarization conversion device 2, when the information light L corresponding to an even field picture obtained therefrom impinges on the polarization conversion device 2, the information light L is outputted therefrom in such a manner that the plane of the polarization thereof is shifted by the phase of λ/2. The information light L outputted therefrom has such a polarization as behaving as an extraordinary ray L2 when it passes through the birefringence plate 3. Thus, the information light L having undergone the polarization impinges on the birefringence plate 3 and is refracted as the extraordinary ray L2 by the birefringence plate 3 and is projected on the screen 14 by "d" with being shifted at a distance of "d" from the ordinary ray L1.

As mentioned above, the even and odd field pictures are respectively displayed on the screen 14 to form a composite image complementing to each other by changing the voltage applied to the polarization conversion device 2 to be "on" and "off".

Thus, according to the first embodiment of the image display apparatus, it is possible to obtain a displayed image having more numbers of the picture elements than those actually provided on the display device 1 by using only one display device 1.

### [Second embodiment of the present invention, as an image sensing apparatus]

Next, the description is given of the second embodiment of an image sensing apparatus of the present invention capable of obtaining a high resolution.

Fig. 2 is a side view for explaining a principle of an image sensing apparatus in the second embodiment of the present invention.

In Fig. 2, a reference character 20 denotes an image sensing apparatus, 4 an image sensing device and 5 a polarizer. The image sensing apparatus 20 comprises the image sensing device 4 as an image sensing means for processing an image formed thereon, the birefringence plate 3 as a birefringence means for shifting an optical axis of the polarized light inputted thereto depending on the status of the polarized light, the polarization conversion device 2 for changing the plane of the polarized light and the polarizer 5 for obtaining the linearly polarized light from the inputted light. These constituting components are disposed along an optical axis (not shown) in this order from left to right.

The operation of the image sensing apparatus 20 is as follows.

In the state where the voltage "V" is not applied to the polarization conversion device 2, after an information light "L" corresponding to the odd field picture is linearly polarized by the polarizer 5, the information light "L" impinges on the birefringence plate 3 through the the polarization conversion device 2 without being polarized. Thus, the information light "L" goes straight to the image sensing plate 1 from the polarization conversion device 2 as an ordinary ray "L1".

In the state where the voltage "V" is applied to the polarization conversion device 2, after an information light "L" corresponding to the even field picture is linearly polarized by the polarizer 5, the information light "L" impinges on the birefringence plate 3 through the the polarization conversion device 2 by being shifted of a phase of *λ*/2. Thus, the information light "L" is inputted to the image sensing plate 1 through the polarization conversion device 2 as an extraordinary ray "L2" with being shifted at the distance "d" from the ordinary ray "L1".

After that, the odd and even field pictures are respectively outputted as video signals by the image processing circuit (not shown). This enables to obtain an image having a high resolution because the image sensing device 4 having a given number of picture elements is exposed to the rays L1, L2 alternately, thus the image sensing device 4 renders an image having an apparent picture elements twice much that caused by a single ray.

Further, it is possible to convert the odd and even field pictures to various kinds of signals corresponding to the various kinds of the scanning forms by using picture memories.

### [Third embodiment of the present invention, as an image display apparatus]

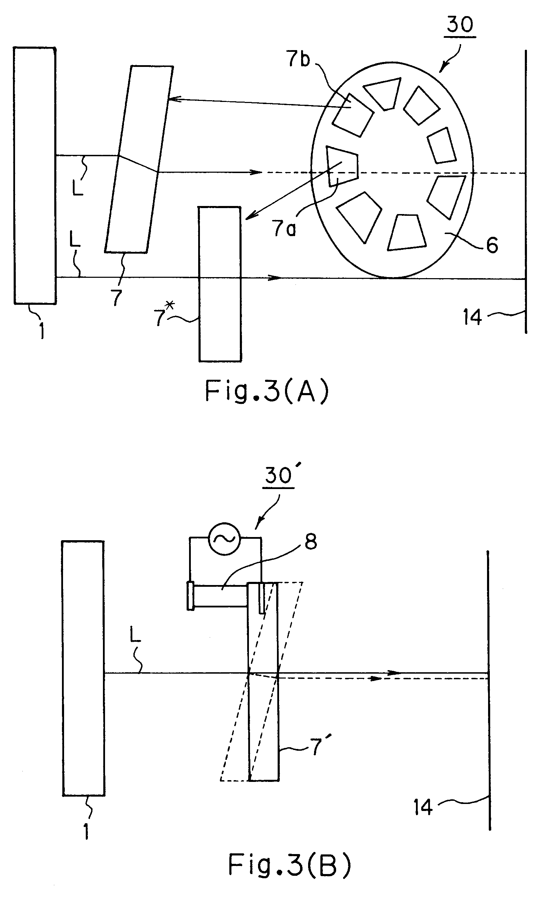

Figs. 3(A) and 3(B) are schematic views for explaining a principle of the image display apparatus in the third embodiment of the present invention.

Referring to Fig. 3(A), a reference character 6 denotes a rotary disk, 7_{*}, 7 first and second parallel flat glass plates (referred to as first and second flat glass plates), 7a a first window for holding the first flat glass plate 7_{*} to be parallel to the rotary disk 6, 7b a second window for holding the second flat glass plate 7 to be slant to the rotary disk 6 and 30 a picture shifting plate.

As shown in Fig. 3(A), on the picture shifting plate 30, the first and second flat glass plates 7_{*} and 7 are alternatively installed in the first and second windows 7a, 7b so as to be parallel to the rotary disk 6 and to be slant to the rotary disk 6 respectively along a circumference of the circular plate 6.

As well known, when an information light "L" perpendicular to the picture shifting plate 30 from the display device 1 impinges on the first flat glass plate 7_{*} which is disposed to be parallel to the picture shifting plate 30, the information light "L" passes straight through the first flat glass plate 7_{*}. On the other hand, when the information light "L" impinges on the second flat glass plate 7 which is disposed to be slant to the rotary disk 6, the information light "L" is refracted as shown in Fig. 3A.

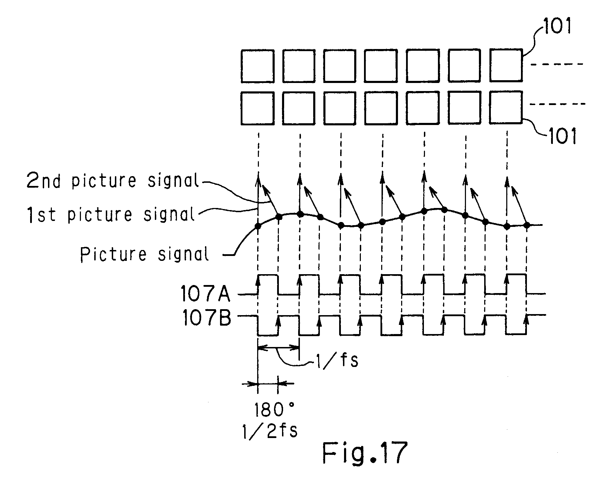

The display device 1 as the light processing means alternately generates first and second information lights which are displayed corresponding to odd and even filed pictures on the screen 14. The first and second information lights are respectively obtained by sampling a picture signal with sampling clock signals, of which phase are shifted 180° out of phase to each other. This specific sampling method is described later, for instance, in Fig. 17.

The first and second information lights are alternately projected on the screen 14 through the first and second glass plats 7_{*}, 7 successively as the odd and even field pictures by causing the picture shifting plate 30 to rotate in synchronization with generation of the first and second information lights.

Next, referring to Fig. 3(B), a reference character 7' denotes a flat grass plate disposed to be perpendicular to an optical axis of the information light "L" projected from the display device 1, 8 a piezoelectric element, and 30' an image shifting plate.

The piezoelectric element 8 is provided on an edge of the parallel flat glass plate 7'. Thus, the angle of the parallel flat glass plate 7' can be changed by activating the piezoelectric element 8.

When a voltage is not applied to the piezoelectric element 8, the angle of the flat glass plate 7' is not changed. Thus, the information light L goes straight through the flat glass plate 7' without being refracted. On the other hand, when a voltage is applied to the piezoelectric element 8, the flat glass plate 7' is stressed to be compressed or strained. Thus, the flat glass plate 7' is displaced to have an angle to the optical axis of the information light L. Therefore, the incident light to the flat glass plate 7' is refracted.

Accordingly, it is possible to obtain a higher density image having a higher resolution on the screen 14 than that of the picture actually displayed on the display device 1.

### [Fourth embodiment of the present invention, as a reflection type display apparatus]

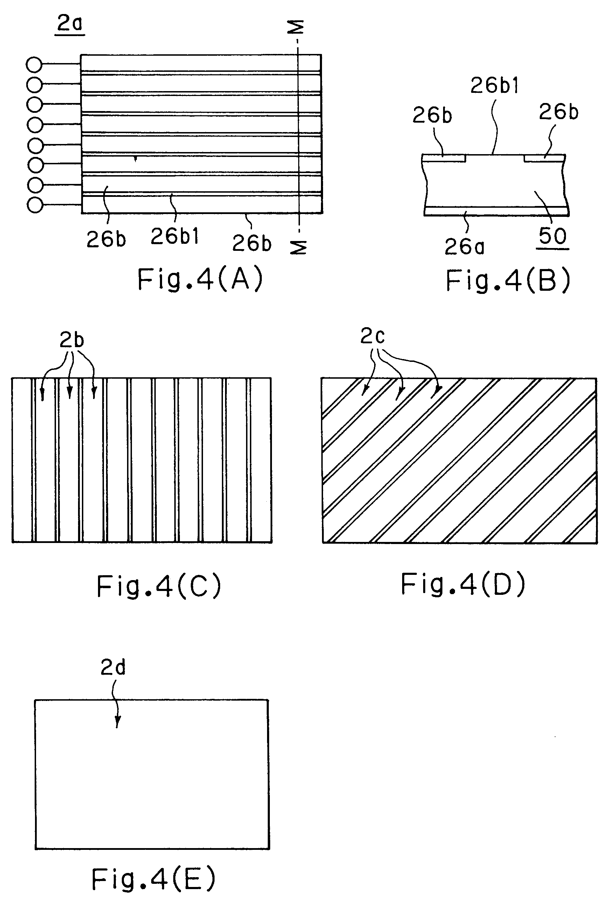

Next, referring to Figs. 4(A) through 4(E), 5 and 7, the description is given of the fourth embodiment of a reflection type display apparatus in the present invention.

Figs. 4(A), 4(C) 4(D) and 4(E) are schematic views showing various kinds of polarization conversion devices, and Fig. 4(B) is a partial side view of a polarization conversion device shown in Fig. 4(A).

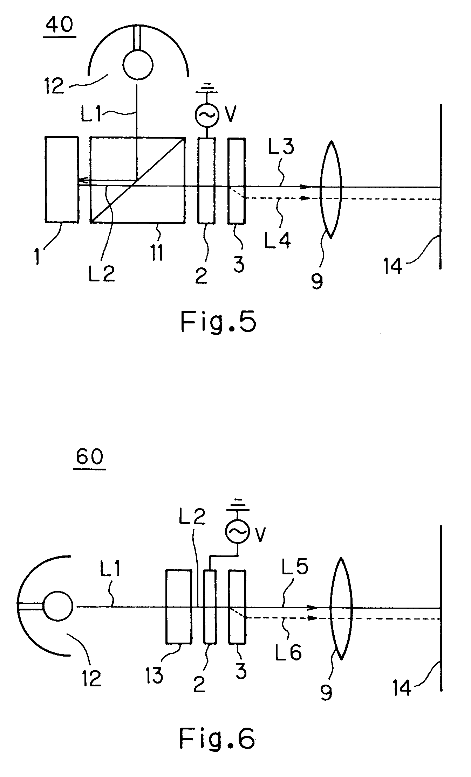

Fig. 5 is a schematic view showing a construction of a reflective type display apparatus of the fourth embodiment of the present invention.

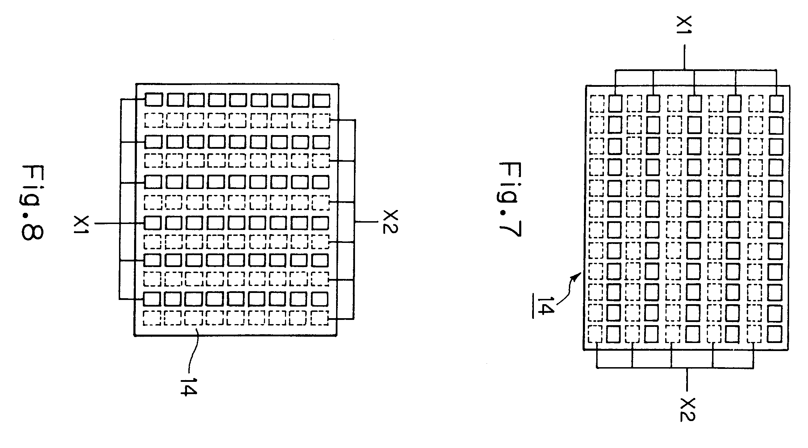

Fig. 7 is a plan view showing a high resolution displayed image having a double density on the screen by shifting the even field picture in a vertical direction.

In the above drawings, the parts having the same construction as those shown in Figs. 1 to 3 are denoted with the same reference characters, and the detailed description is omitted for simplicity.

In Fig. 4(B), a reference character 50 denotes a liquid crystal of a polarization conversion device 2a shown in Fig.4(A).

In Fig. 5, a reference character 12 denotes a light source of a reading light, 11 a polarizing beam splitter (PBS), and in Fig. 7, X1 a pattern of the odd field picture on the screen 14, and X2 a pattern of the even field picture on the screen 14.

Referring to Fig. 5, a reflecting type image display apparatus 40 comprises the light source 12 for generating a reading light L1, the PBS 11 having a plane for reflecting the light from the light source 12 as a polarized reading light and for transmitting the information light L2 obtained from the polarized reading light, the display device 1 for modulating the polarized reading light as the information light L2, the polarization conversion device 2 for changing the polarized plane of the information light L2 transmitted from the PBS 11, the birefringence plate 3 for transmitting the light having a polarized plane corresponding to the change of the phase and a projection lens 9 for focusing the information light L2 from the birefringence plate 3 on the screen 14. As the polarization conversion device 2, the polarization conversion device 2a having stripe electrodes 26b are employed as shown in Fig. 4(A).

The polarization conversion device 2a has a plurality of transparent stripe electrodes (referred to as stripe electrodes) 26b disposed parallel to the line direction of picture elements of the display device 1. Voltage is applied to the distal ends of the respective stripe electrodes 26b so as to change the phase of the incident light. The number of the stripe electrodes 26b may be made corresponding to the number of the picture lines (horizontal line of picture) of the display device 1. However, when widths of the stripe electrodes 26b are made smaller, there is developed a consecutive distribution of refraction coefficient between the stripe electrode 26b and gaps 26b1 interposed between adjacent stripe electrodes 26b because the distance of the gap are made constant. This causes a lens effect, resulting in a displayed image being out of focus. Further, when the polarization conversion device 2a is positioned nearby the display device 1, this causes the stripe electrodes 266 to be imaged on the screen 14. Thus, the number of the stripe electrodes 26b is preferred to be selected to about 10.

As other examples of the polarization conversion device 2, there are one composed of plural stripe electrodes 2b disposed to be perpendicular to the lines of picture elements of the display device 1 as shown in Fig. 4(C), one composed of plural stripe electrodes 2c disposed to be slant to the lines of picture elements as shown in Fig. 4(D), and one having a plane 2d instead of the stripe electrodes as shown in Fig. 4(E). These polarization conversion devices are optionally used depending on the purposes of use.

Upon an operation of the image display apparatus, the reading light L1 generated by the light source 12 is reflected by the PBS 11 as a light of either a P-wave or an S-wave, and the reflected reading light L1 impinges on the display device 1. In the display device 1, the incident reading light L1 is modulated and outputted as an information light L2. This information light L2 includes both the S-wave and the P-wave corresponding to a degree of the modulation thereof. Thus, when the information light L2 passes through the PBS 11, one of the polarized components of the information light L2 is eliminated, and the other polarized component impinges on the polarization conversion device 2. When the voltage is not applied to the polarization conversion device 2, the polarized plane of the other polarized component light is not rotated, and it is inputted to the birefringence plate 3 and outputted therefrom as an ordinary ray L3. Thus, the ordinary ray L3 is projected straight on the screen 14 through the objective lens 9. On the other hand, when the voltage is applied to the polarization conversion device 2, the polarized plane of the other component of the information light L2 is rotated at a phase of *λ*/2, and it is inputted to the birefringence plate 3 and outputted therefrom an extraordinary ray L4. Thus, the extraordinary ray L4 is projected through the objective lens 9 on the screen 14 by being shifted downward from the position of the ordinary ray.

Referring to Figs. 5 and 7, in the state where the voltage is not applied to the polarization conversion device 2, the information light L2 of the odd field picture read out from the display device 1 by the reading light L1 from the light source 12 is inputted to the birefringence plate 3 without the rotation of the phase thereof. Thus, this light becomes an ordinary ray L3 to the birefringence plate 3 to go straight therethrough.

On the other hand, in the state where the voltage is applied to the polarization conversion device 2, the information light L2 of the even field picture read out from the display device 1 is inputted to the birefringence plate 3 in such a manner that the polarized plane of the information light is rotated at a phase of *λ*/2. Thus, this light becomes an extraordinary ray L4 as going through the birefringence plate 3. Thus, this extraordinary ray L4 is shifted from the ordinary ray L3 by the birefringence plate 3.

Accordingly, the odd and even field pictures are respectively focused on the screen 14 as shown with reference characters X1 and X2.

As a result, the displayed image having a double density in the number of picture elements is obtained on the screen 14 compared with the image displayed as is by the picture elements of the display device 1.

When the birefringence plate 3 is disposed in such a manner that the direction of the generated birefringence is to be horizontal with respect to the ordinary ray, the even field picture can be shifted to the horizontal direction as shown in Fig. 8.

Fig. 8 is a plan view showing a high resolution displayed image having a double density on the screen by shifting the even field picture in a horizontal direction.

Actually, when employing the liquid crystal as the polarization conversion device 2, it is necessary to adjust an appropriate switching timing relating to the signal switching of the display device and the polarization switching of the polarization conversion device 2 because of a low response speed of the liquid crystal therein.

Further, when employing the liquid crystal as the display device 1, it is also necessary to adjust an appropriate switching timing relating to the signal switching of the display device and the signal switching of the polarization in the polarization conversion device 2 because of a low response speed of the display device 1.

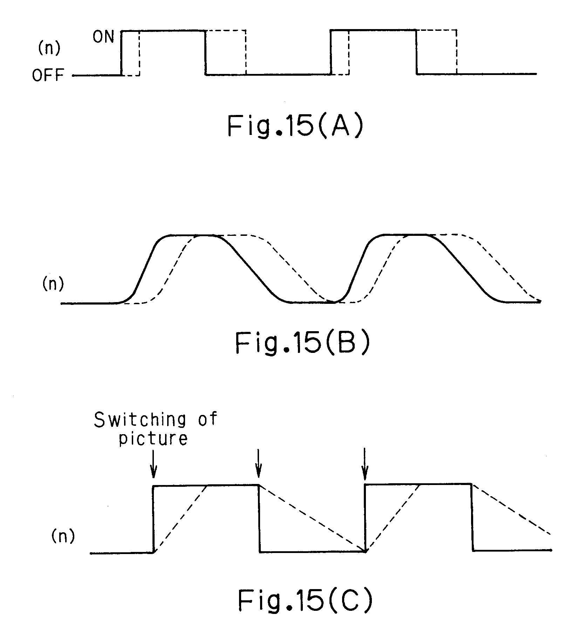

Next, the description is given of the switching timing referring to Figs. 15(A) to 15(C).

Figs. 15(A) to 15(C) show diagrams for explaining a switching timing relation between the signal switching of the display device and the switching timing of the polarization in the polarization conversion device, wherein the polarization conversion device 2a shown in Fig. 4(A) is employed.

In Fig. 15(A), there is shown a driving voltage waveform applied to the n-th stripe electrode in the polarization conversion device 2a. In Fig. 15(B), there is shown a response of the polarization conversion device 2a at that moment. In Fig. 15(C), there is shown a response of the displayed image of display device corresponding to the n-th stripe electrode.

In the drawings, the solid line shows the case where the response speed of the subject device is high, and the broken line shows the case where the response speed of the subject device is low.

As seen from Figs. 15(A) to 15(C), the switching timing of the voltage applied to the polarization conversion device 2 is changed corresponding to the the response speeds of the display device 1 and the polarization conversion device 2a.

It is preferable to adjust the appropriate switching timing, however, this adjustment is flexible to obtain the shifted picture.

In order to obtain the polarization conversion device 2 having a high response speed, a ferroelectric liquid crystal and a TN liquid crystal may be employed, wherein the TN liquid crystal are switched by a low and high frequency signal.

### [Fifth embodiment of the present invention, as a transmission type display apparatus]

Fig. 6 is a schematic view showing a construction of a transmission type display apparatus in a fifth embodiment of the present invention.

In Fig. 6, the parts having the same construction as those shown in Figs. 1 to 3 are denoted with the same reference characters, and the detailed description is omitted for simplicity.

Referring to Fig. 6, a transmission type image display apparatus 60 comprises the light source 12 for generating a reading light L1, a transmission type display device 13 capable of producing the information light L2 by modulating the reading light L1 based on the picture information, the polarization conversion device 2, the birefringence plate 3 and a projection lens 9 for focusing the information light L2 from the birefringence plate 3 on the screen 14. These are disposed in this order. As the polarization conversion device 2, a polarization conversion device 2a having stripe electrodes 26b is employed as shown in Fig. 4(A).

Upon an operation of the transmission type image display apparatus 60, the reading light L1 generated by the light source 12 is inputted to the transmission type display device 13. When the modulated information light L2 of the odd field picture is inputted to the polarization conversion device 2 to which an voltage is not applied, the information light L2 is outputted therefrom without the rotation of its polarized plane and is inputted to the birefringence plate 3, and outputted therefrom as an ordinary ray L5. Thus, the ordinary ray L5 goes straight and is projected on the screen 14 by the objective lens 9.

When the modulated information light L2 of the even field picture is inputted to the polarization conversion device 2 to which an voltage is applied, the information light L2 is outputted therefrom in such a manner that the polarized plane thereof is rotated at a phase of *λ*/2 and is inputted to the birefringence plate 3, and outputted therefrom as an extra-ordinary ray L6. Thus, the extraordinary ray L6 is shifted downward from the ordinary ray L5 and is projected on the screen 14 by the objective lens 9.

Accordingly, the odd and even field pictures are respectively focused on the screen 14 as shown with reference characters X1 and X2 in Fig. 7.

As a result, the displayed image having a double density image is obtained on the screen 14 compared with the image displayed as is by the picture elements of the display device 1.

Needless to say, the same operation principle can be applied to the both cases respectively employing the transmission type display device 13 and the reflection type display device 1.

### [Sixth embodiment of the present invention, as a display apparatus employing a combination of first and second polarization conversion devices (2 and 2'), and a combination of first and second birefringence plates (3 and 3'].

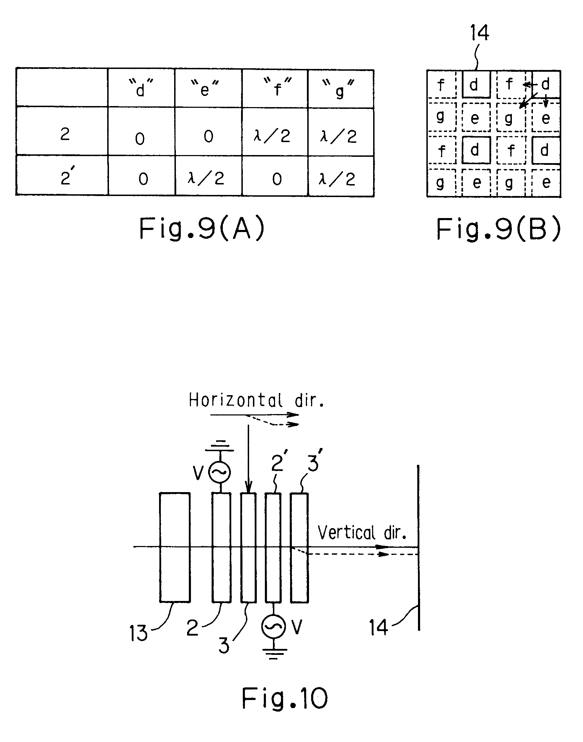

Referring to Figs. 9(A) to 9(B) and Fig. 10, the description is given of an image display apparatus employing a combination of first and second polarization conversion devices 2, 2' and a combination of first and second birefringence plates 3, 3' in a sixth embodiment of the present invention.

Fig. 9(A) is a table showing relations between phase shifts caused by first and second polarization conversion devices and resulted positional displacement caused by the phase shift, wherein a reference character "d" denoted an original position and reference characters "c", "e", "f" and "g" denotes positions of picture elements of a picture displayed on the screen displaced from the original position "d". The reference characters "d", "c", "e", "f" and "g" also represent respectively "picture elements" displaced at these positions. The numerical character "0" denotes no phase shift, i.e., the first and second polarization conversion device is not activated to cause a phase shift. The character "*λ*/2" denotes the device is activated to cause the "*λ*/2" phase shift.

Fig. 9(B) is a partial enlarged plan view of screen 14 showing how the original picture elements are displaced on the screen 14 with respect to the original position "d" after the above explained displacement.

Fig. 10 is a schematic view showing a sixth embodiment of the present invention as an image display apparatus employing a combination of first and second polarization conversion devices and a combination of first and second birefringence plates.

Referring to Fig. 10, first and second birefringence plates 3, 3' are disposed in such a manner that when an extraordinary ray (a ray which behaves as an extraordinary ray when it passes through a birefringence plate placed in a path of the ray) from the first polarization conversion device 2 impinges on the first birefringence plate 3, the extraordinary ray is refracted in a horizontal direction as shown with a broken line, and when the extraordinary ray from the second polarization conversion device 2' impinges on the second birefringence plate 3', the extraordinary ray is refracted in a vertical direction.

In short, the first and second polarization conversion devices 2, 2' respectively have functions of displacing rays of the picture elements of a picture in the horizontal direction and in the vertical direction upon activation thereof.

The principle for obtaining an image having high resolution is explained in the example of the transmission type display device of the fifth embodiment. Thus, the description thereof is omitted here, but, hereinafter, the description is given of a reason why an image having a high resolution is obtained on the screen 14 by employing the combination of the first and second polarization conversion devices 2, 2'.

Referring to Fig. 9(A), when the both polarization conversion devices 2, 2' are inactive thus not causing phase shifts, the positions of picture elements "d" are shifted neither in the horizontal direction nor in the vertical direction because only the ordinary ray only is present. Thus, for instance, four original picture elements "d" adjacent to each other in the horizontal direction and in the vertical direction are displayed on the screen 14 as shown in Fig. 9(B).

When the first polarization conversion device 2 stays inactive and the second polarization conversion device 2' is activated and causes a phase shift of *λ*/2, the ray of picture elements is displaced only in the vertical direction to the position "e" with respect to the positions "d" resulting the corresponding picture elements being displayed bellow the position "d" on the screen 14.

In the same manner as mentioned above, when only the first polarization conversion device 2 is activated, the displacement occurs in the horizontal direction to the position "f", resulting being displayed at the left-hand position of the picture element "d" on the screen 14. When both the first and second polarization conversion devices 2 and 2' are activated, the displacement occurs both in the horizontal direction and in the vertical direction, resulting the corresponding picture elements being displayed at the position "g" which is lower left-hand of the position "d" on the screen 14.

According to this embodiment, it is possible to obtain an image having a resolution of 2-4 times on the screen by selecting an appropriate mode according to activation of the first and second polarization conversion devices 2, 2' and the first and second birefringence plate 3, 3'.

### [Seventh embodiment of the present invention, as a 3-dimension type display apparatus]

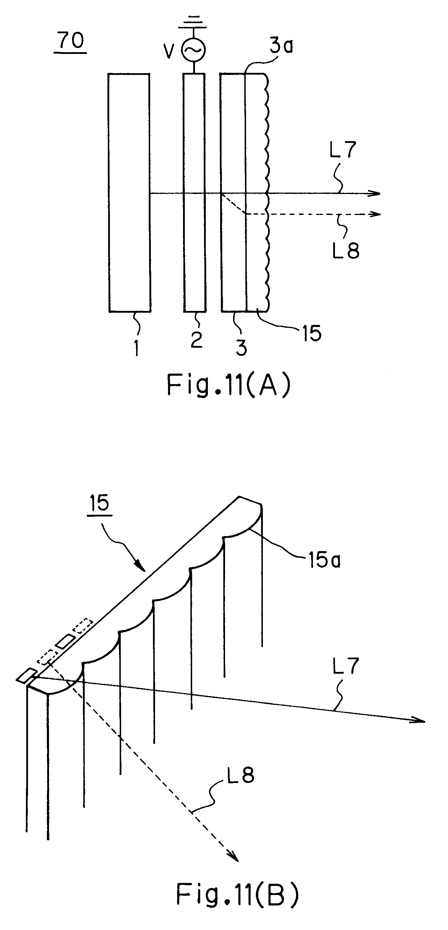

Fig. 11(A) is a schematic view showing a construction of a 3-dimensional type display apparatus of the present invention.

Fig. 11(B) is a perspective view showing an ordinary ray and an extraordinary ray going in different directions each other through a lenticular lens plate. In Figs. 11(A) and 11(B), the parts having the same construction as those shown in Figs. 1 to 10 are denoted with the same reference characters, and the detailed description is omitted for simplicity.

Referring to Figs. 11(A) and 11(B), a reference number 15 denotes a lenticular lens plate, 15a a lens surface having a plurality of semicylindrical shapes of the lenticular lens plate 15, and 3a an output surface of the birefringence plate 3.

The 3-dimensional type display device 70 has such a construction that in the display apparatus 10 of the first embodiment, the lenticular lens plate 15 is mounted on the output surface 3a of the birefringence plate 3.

The operation of the display device 10 of the first embodiment is described in the foregoing, thus, the description is only given of the principle for obtaining the 3-dimension picture by using the lenticular lens plate 15 mounted on the output surface 3a of the birefringence plate.

When a picture of an ordinary ray L7 and an extraordinary ray L8 from the birefringence plate 3 is inputted to the lenticular lens 15, the directions of the ordinary and extraordinary rays L7, L8 are respectively changed by the lens surface 15a having semicylindrical shapes of the lenticular lens plate 15 as shown in Fig. 11(B). Accordingly, it is possible to obtain the 3-dimensional picture, for instance, by seeing the ordinary ray L7 with the right eye and seeing the extraordinary ray L8 with the left eye of the user.

### [Eighth embodiment of the present invention, as another 3-dimensional type display apparatus]

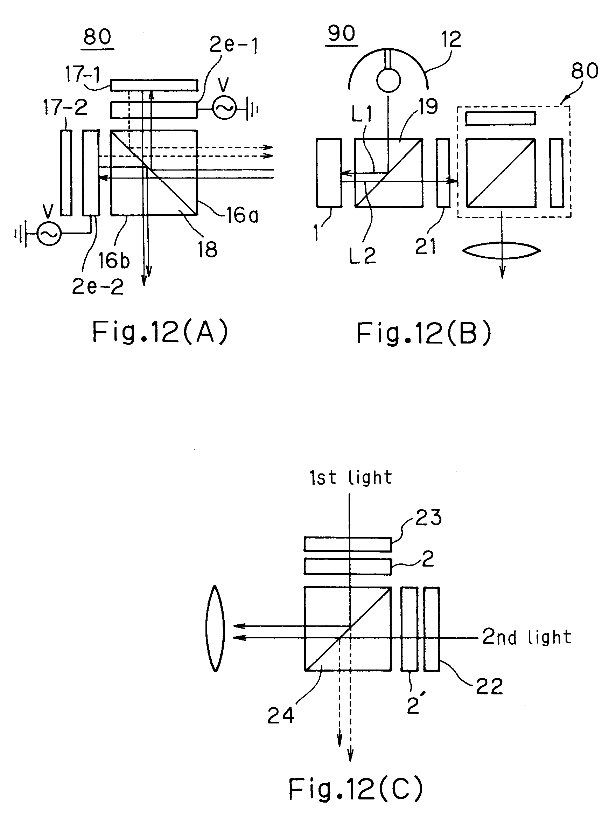

Figs. 12(A) to 12(C) are schematic views for explaining a construction of another 3-dimensional type display apparatus of the present invention, wherein Fig. 12(A) shows a schematic block for explaining the selection of P and S (PS hereinafter) polarized lights, Fig. 12(B) shows a schematic view showing a construction of the 3-dimensional type display apparatus, and Fig. 12(C) shows a schematic view for explaining a construction of a picture switching device thereof. In Figs. 12(A) to 12(C), the parts having the same construction as those shown in Figs. 1 to 11 are denoted with the same reference characters, and the detailed description is omitted for simplicity.

In the drawings, a reference character 2e denotes a polarization conversion device, 16a an input surface of the light, 16b an output surface of the light, 17 a mirror, 18 a PBS, 21 a *λ*/4 plate, and 22, 23 display devices.

First, the description is given of the PS polarization device 80 for selecting one of P-polarized light and S-polarized light by using the PBS, referring to Fig. 12(A). The PS polarization device 80 comprises the PBS 18 for reflecting and transmitting an incident light, a first mirror 17-1 for reflecting a light reflected at a right angle by the PBS 18, a first polarization conversion device 2e-1 disposed between the first mirror 17-1 and the PBS 18, a second mirror 17-2 for reflecting a light coming straight through the PBS 18, and a second polarization conversion device 2e-2 disposed between the second mirror 17-2 and the PBS 18.

The phase shift caused by each of the first and second polarization conversion devices 2e-1, 2e-2 is made to be *λ*/4 by adjusting the voltage applied thereto.

When a light impinges on the PBS 18, one of the P and S waves passes through it, and the other is reflected by the PBS 18. Both the reflected light and the light passing therethrough return to the PBS 18 by being respectively reflected by the first and second mirrors 17-1, 17-2.

At that time, when the voltage V is applied to the first and second polarization conversion devices 2e-1, 2e-2, to generate the phase shift of *λ*/4 in the polarization conversion devices 2e-1, 2e-2, the lights reflected by the first and second mirrors 17-1, 17-2 have respectively the phase shift of *λ*/2. Thus, the S-wave (P-wave) of the light is converted to the P-wave (S-wave) and is outputted from the output surface 16b of the PBS 18.

When the voltage V is not applied to the polarization conversion devices 2e-1, 2e-2, the lights reflected by the first and second mirror 17-1, 17-2 are outputted from the input surface 16a of the PBS 18 as shown with dotted lines in Fig. 12(A).

Next, the principle of 3-dimensional picture obtained by inputting the information light L2 to the PS polarization device 80 is explained, referring to Fig. 12(B).

3-dimension type display apparatus 90 comprises a light source 12 for generating a reading light L1, a PBS 19 for polarizing the reading light L1 and transmitting the information light L2, the display device 1 for generating the information light L2 by modulating and reflecting the reading light L1, a *λ*/4 plate 21 for converting the information light L2 from the PBS 19 to a circularly polarized light and the PS polarization device 80.

Upon an operation of the 3-dimensional type image display apparatus, when the reading light L1 from the light source 12 impinges on the PBS 19, a light of either the P-wave or the S-wave is reflected and impinges on the display device 1. The reading light L1 is modulated by the display device 1 and is outputted as the information light L2. This information light L2 passes through the PBS 19, wherein one of polarized components is removed. This information light L2 impinges on the *λ*/4 plate 21, wherein the information light is converted to a circularly polarized light to obtain the 3-dimension picture. After that, the P-wave and the S-wave are outputted from the PS polarization device 80. Thus, a 3-dimensional picture is obtained by respectively seeing the S-wave and the P-wave with the right and left eyes of a user by using a pair of glasses, one exclusively transmitting the S-wave and the other the P-wave.

Next, the description is given to the picture switching device, referring to Fig. 12(C).

This picture switching device comprises one set composed of a transmission type display device 23 and a polarization conversion device 2, and another set composed of a transmission type display device 22 and a polarization conversion device 2', and a PBS 24. These two sets are respectively disposed to face the surfaces of the PBS 24 so as to be perpendicular to each other. The polarization conversion devices 2, 2' are respectively disposed between the PBS 24 and the transmission type display device 23, and between the PBS 24 and the transmission type display device 22.

Upon an operation of the image display apparatus, different picture information signals are respectively inputted to the transmission type display devices 22, 23 and the picture information is switched by causing the phase shifts in the polarization conversion devices 2, 2'. Thus, the picture information can be switched selectively between from the transmission type display device 22 and from the transmission type display device 23, or from both the devices 22 and 23 at the same time without switching thereof.

The abovementioned picture information is not limited to the visible lights but includes other electromagnetic wave information.

The descriptions are given of the various kinds of embodiments of the image display apparatuses and the image sensing apparatuses, however, it should be noted that the embodiments are not limited to these apparatuses but are applicable to picture printers and image processing by using light computers.

Next, a description is given of an example of a concrete circuit construction of the display device mentioned in the foregoing and an image display apparatus having this display device.

### [A ninth embodiment of the present invention as a display device and an embodiment of image display apparatus using the same image display]

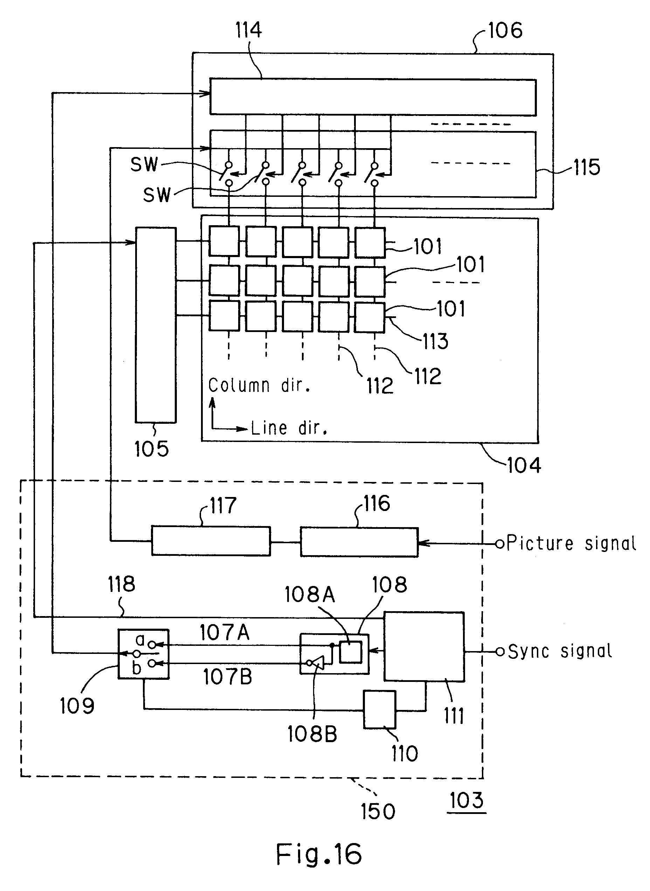

A description is given of a ninth embodiment of the present invention as display device referring to Figs. 16 to 21.

Fig. 16 is a block diagram of a ninth embodiment in the present invention of a display device as a picture processing device used in the present invention.

Fig. 17 is a schematic view showing picture elements of the display device shown in Fig. 16 and sampling status of a picture signal.

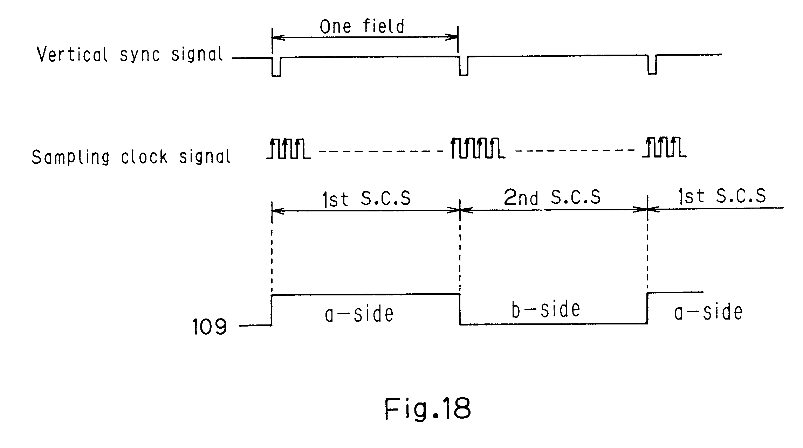

Fig. 18 is a timing chart for explaining a relation between a vertical sync signal of the display device shown in Fig. 16 and 2 kinds of sampling clock signals.

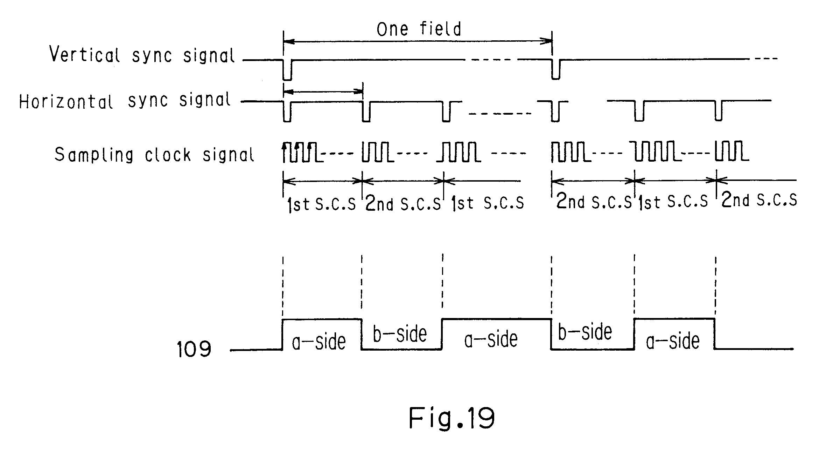

Fig. 19 is a timing chart for explaining another relation between a vertical sync signal of the display device shown in Fig. 16 and 2 kinds of sampling clock signals.

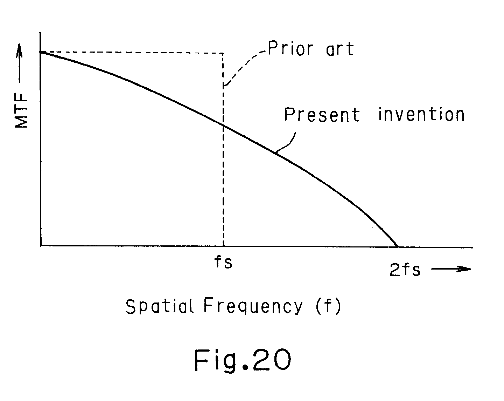

Fig. 20 is a graph showing a relation between a spatial frequency and a MTF (Modulation Transfer Function).

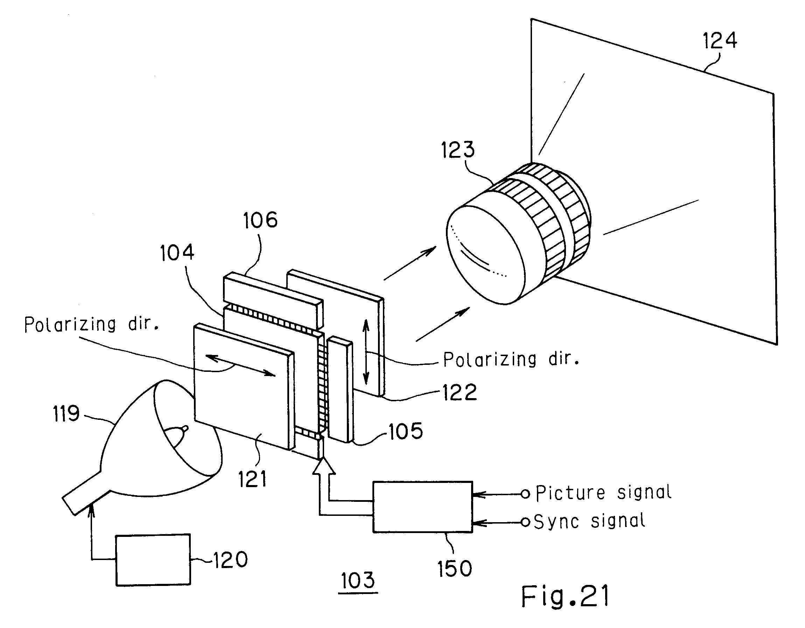

Fig. 21 is a perspective view showing an image displaying apparatus employing the display device shown in Fig. 16.

Referring to Fig. 16, the display device 103 mainly comprises a liquid crystal display section 104 having a plurality of picture elements 101 as a liquid crystal display means, a vertical driving section 105 for applying scanning signals to the picture elements 101 as a vertical driving means, a horizontal driving section 106 for applying sampled picture signals to the picture elements 101 as a horizontal driving means, a sampling clock generating section 108 for generating a first and second sampling clock signals 107A, 107B having a phase difference of 180° to each other, a sampling clock switching section 109 having a switch for switching one from among the first and second sampling clock signals 107A, 107B, and a switching control section 110 for controlling the switching of the sampling clock switching section 109 with a predetermined cycle. These sections are controlled by a driving control device such as a microcomputer.

The liquid crystal display section 104 has a plurality of the picture elements 101 in a matrix state in a line direction (or a horizontal direction) and in a column direction or (in a vertical direction).

The picture elements 101 disposed in the column direction are connected to signal lead lines 112 for supplying picture signals to every column of the picture elements 101 and the picture elements 101 disposed in the line direction are connected to scanning lead lines 113 for supplying scanning signals to every line of the picture elements 101.

The horizontal driving section 106 comprises a horizontal scanning circuit 114 composed of, for example, a shift register for latching the sampling clock signals sequentially therein as mentioned hereinafter, and an analogue switch group 115 having a plurality of switches SW which are connected to the signal lead lines 112.

Upon an operation of the image display apparatus, the picture signals inputted to the analogue switches SW are sampled and scanned by switching the analogue switches SW sequentially by the operation of the horizontal scanning circuit 114.

In other words, the picture signals are sequentially fed to each of the signal lead lines 112 which are disposed parallel in the column direction, by turning on each of the switches SW sequentially in sync with the sampling clock signal.

The vertical driving section 105 is composed of a vertical shift register, and feeds a scanning signal to each of the scanning lead lines 113 disposed parallel in the line direction. Thus, a transistor corresponding to a picture element turns on by the scanning signal through the scanning lead line, resulting in an excitation of liquid crystal in accordance with the scanning signal.

The sampling clock generating section 108 comprises a standard clock signal generating section 108A for generating a standard clock signal and an inverter 108B for inverting a polarity of the standard clock signal. The standard clock signal is used as a first sampling clock signal 107A and the inverted standard clock signal is used as a second sampling clock signal 107B. Thus, they are 180° out of the phase each other.

The switching control section 110 operates under the driving control section 111, and selects the sampling clock signal by switching the sampling clock switching section 109 composed of the switches SW with a predetermined period. This switching control section 110 switches at every vertical scanning period or switches at every horizontal scanning period and switches further at every vertical scanning period on the same horizontal line as mentioned hereinafter.

Further, the picture signals are inputted to the analogue switch group 115 through a processing circuit 116 for processing necessary processing such as γ-compensation and a driving circuit 117 for amplifying the output therefrom. In Fig. 16, an area surrounded with broken lines and designated as 150 represents a driving circuit.

Next, a description is simply given of the basic operation of the display device 103.

Referring to Fig. 17, upon switching at every vertical period, a picture signal of a certain field sampled by the first sampling crock signal 107A is displayed as a horizontal series of the picture elements 101 as a first picture signal. When switched to the next field, the picture signal sampled by the second sampling crock signal 107B having 180° out of phase with respect to the first sampling clock signal is also displayed as the same series of picture elements 101 as a second picture signal.

Specifically, the vertical driving section 105 feeds the scanning signal to each of the scanning lead lines 113 so as to complete one vertical scanning period defined by a vertical sync signal 118. The horizontal driving section 106 successively turns on each of switches SW of the analogue switch group 115 in accordance with the first sampling clock signal 107A or the second sampling clock signal 107B. After undergoing necessary signal processings such as γ-compensation, the picture signal is converted to a signal form suitable to the liquid crystal by the driving amplifying circuit 117, and is inputted to the analogue switch group 115. The switching control section 110 switches the sampling clock switching section 109 at every vertical scanning period (a field) or at every horizontal period (a line) so as to select one from among the first and second sampling clock signals 107A, 107B and to convert the polarity.

Fig. 18 shows a timing chart of each waveform in switching the sampling clock signal at every vertical scanning period, wherein the sampling clock switching section 109 is alternately switched between an a-side and a b-side so as to alternately select the first sampling clock signal 107A or the second sampling clock signal 107B.

Thus, as mentioned in the foregoing referring to Fig.17, the picture signal is sampled at a position shifted by a phase of 180°, and the sampled signals are displayed at the same position of picture elements.

Therefore, according to the present invention, the number of sampled picture signals are increased because sampling is performed on a picture signal at every 180° of phase compared with that of the prior art where the sampling is performed at every 360° of phase. This contributes to increase picture information density and to obtain a smooth picture having a high resolution.

Fig. 19 is another timing chart showing a different switching operation from that of the timing chart shown in Fig. 18, wherein the first and second sampling clock signals are switched every horizontal scanning period defined by the horizontal sync signal and every vertical scanning period (field).

In this case, the number of sampled signals or sampled positions is increased. Thus, this contributes also to increase picture information density and to obtain a smooth picture having a high resolution.

Fig. 20 shows a relation between a spatial frequency "f" and an MTF (Modulation Transfer Function), wherein a reference character "fs" denotes the frequency of the sampling clock signal. The characteristic curve of the present invention is depicted with a solid line, and that of the prior art is depicted with broken lines.

As seen from Fig. 20, in the characteristic curve of the present invention, the spatial frequency reaches up to 2fs compared with that of the prior art. The resolution of the present invention is largely improved, although the resolution thereof is not improved twice as large as that of the prior art.

Fig. 21 is an image display apparatus employing the display device shown in Fig. 16.

A light source 119 connected to a power source 120 is disposed opposite to a screen 124 with respect to a liquid crystal section 104. A first polarizing plate 121 of which a polarizing direction is made parallel to a horizontal direction, is disposed between the liquid crystal section 104 and the light source 119, and a second polarizing plate 122 of which a polarizing direction is made vertical to the horizontal direction is disposed between the liquid crystal section 104 and the screen 124 Thus, an intensity modulated light corresponding to a degree of polarization, is obtained. The first and second polarizing plates 121, 122 make a cross Nicol relation or a parallel Nicol relation. At a light output side of the second polarizing plate 122, the projection lens 123 is disposed to project an image on a screen 124.

The image projected on the screen 124 has an excellent smoothness and a high resolution because the image displayed by the display device 103 has also such an excellent smoothness and a high resolution. In the above embodiments, the description is given of a case where a monochromatic picture is displayed by the display device. Next, the description is given of a case where a color picture is displayed by the display device.

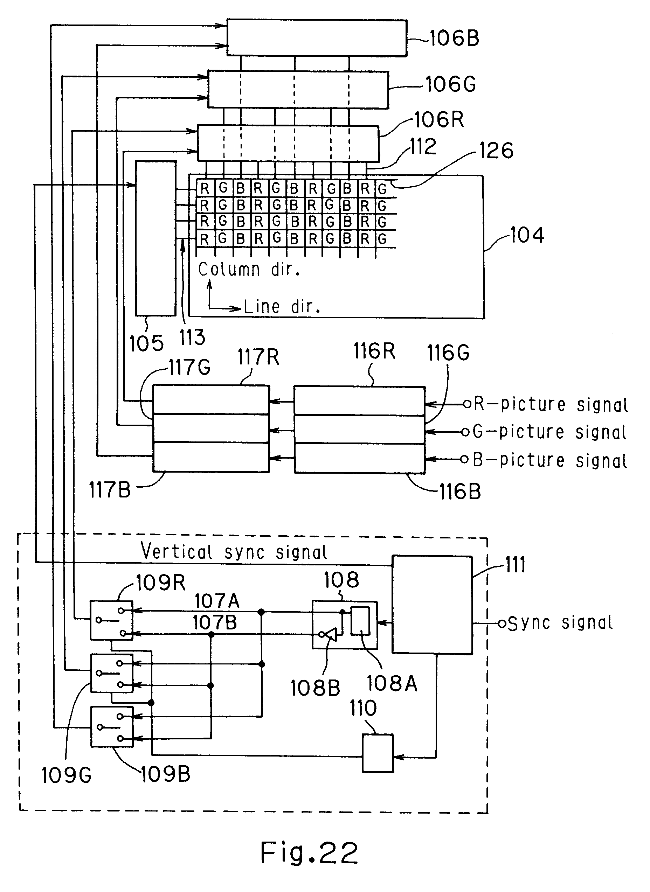

Fig. 22 is a block diagram of a tenth embodiment in the preset invention of a display device as a picture processing device used in the present invention.

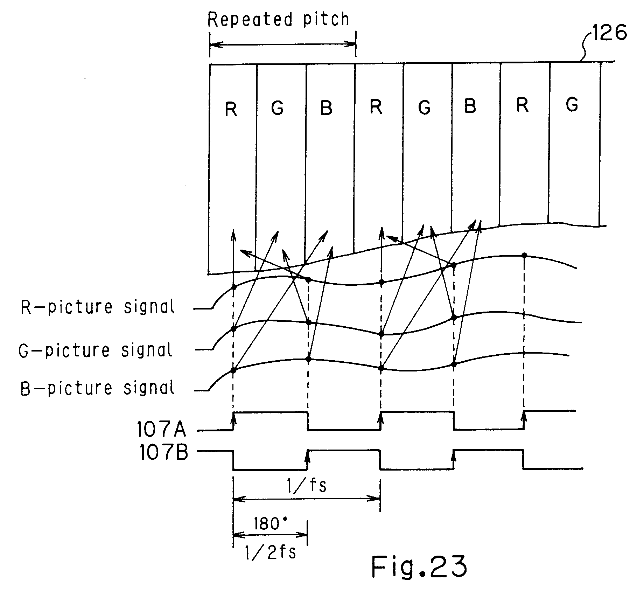

Fig. 23 is a schematic view showing picture elements of the display device shown in Fig. 22 and sampling status of a picture signal. In Figs. 22, 23, the same parts as shown in Fig. 16 is denoted with the same reference characters and the explanation thereof is omitted.

In the case of displaying a color picture, the different points from the display device for displaying a monochromatic picture are that the horizontal driving section is composed of three blocks corresponding to the three color components, R (red), G (green), B (blue) (referred to as RGB hereinafter), and RGB filters are further provided.

Specifically, as shown in Figs. 22, 23, in the liquid crystal display section 104, there are provided RGB stripe filters 126 disposed in a form of vertical columns, wherein each stripe corresponds to each of the picture elements aligned horizontally and the RGB make one block of filters.

In the embodiment shown in Figs. 22, 23, the RGB filters 126 are disposed repeatedly in a line direction, and the same color filter is disposed in a column direction as a stripe. As mentioned in the foregoing, the horizontal driving section 106 is composed of three blocks, an R-horizontal driving section 106R connected to R-picture elements, a G-horizontal driving section 106G connected to G-picture elements and a B-horizontal driving section 106B connected to B-picture elements.

As an R-picture signal, a G-picture signal and a B-picture signal are applied in accordance with the horizontal driving sections 106R, 106G, 106B, both the processing circuit 116 and the driving circuit 117 are respectively composed of three processing circuits and three driving circuit, i.e. , an R-processing circuit 116R, a G-processing circuit 116G, a B-processing circuit 116B, and an R-driving circuit 117R, a G-driving circuit 117G and a B-driving circuit 117B.

Further, the sampling clock switching section 109 is composed of three sampling clock switching sections, i.e., an R-sampling clock switching section 109R, a G-sampling clock switching section 109G and a B-sampling clock switching section 109B to feed sampling clock signals to the corresponding three horizontal driving sections 106R, 106G, 106B.

In this case, as shown in Fig. 23, after each of the RGB picture signals sampled at first positions by the first sampling clock signal 107A is displayed as each of the corresponding RGB picture elements, each of the RGB picture signals sampled at second positions shifted 180° of phase from the first position by the second sampling clock signal 107B is displayed as the same RGB picture elements.

Thus, in this case, the picture signal is sampled at a position shifted by a phase of 180° in every field or in every line, and the sampled signals are displayed as the same picture elements in the same manner as mentioned in the foregoing referred to Figs. 16, 17.

As a result, the number of sampled picture signals are increased, resulting in an increment of picture information and a smooth picture having a high resolution.

Further, in this embodiment of displaying a color picture, the sampling of each of the RGB picture signals is performed at an identical position or at an identical phase, however, the present invention is not limited to this.

For instance, the sampling position of each of the the RGB picture signals may be shifted to appropriate positions from each other. In other words, it is possible to sample at different phases of the sampling clock signal regarding the RGB picture signals.

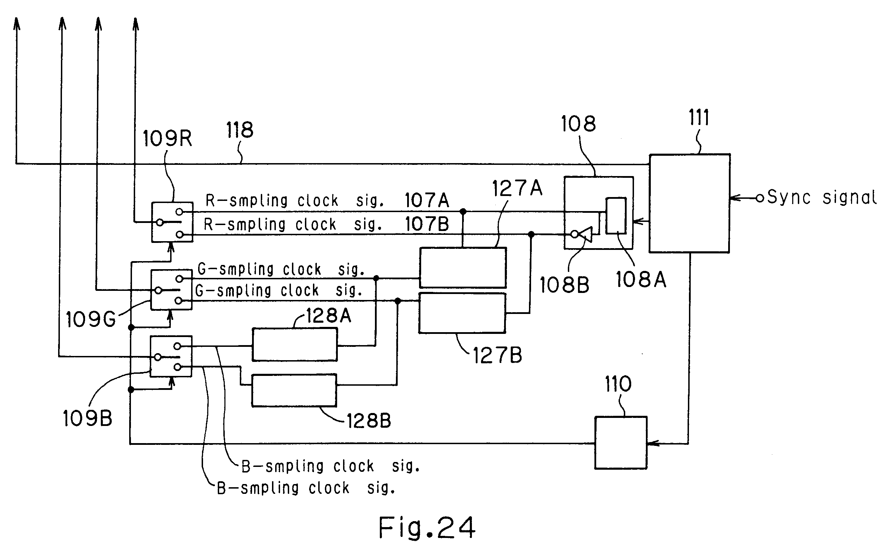

Fig. 24 is a partial block diagram for shifting the sampling positions of the RGB picture signals from each other at 120° of phase. This partial block diagram corresponds to the section surrounded by the broken line in Fig. 22.

Specifically, the first and second sampling clock signals 107A, 107B outputted from the sampling clock generating section 108 are inputted to the R-sampling clock switching section 109R directly. They are also supplied to the G-sampling clock switching section 109G through 120° delay circuits 127A, 127B respectively, and further to the B-sampling switching section 109B through 120° delay circuits 128A, 128B additionally and respectively by connecting them to outputs of the 120° delay circuits 127A, 127B, respectively.

By this construction, it is possible to successively delay the phase of 120° each between the 3 sampling clock signals for the RGB color signals.

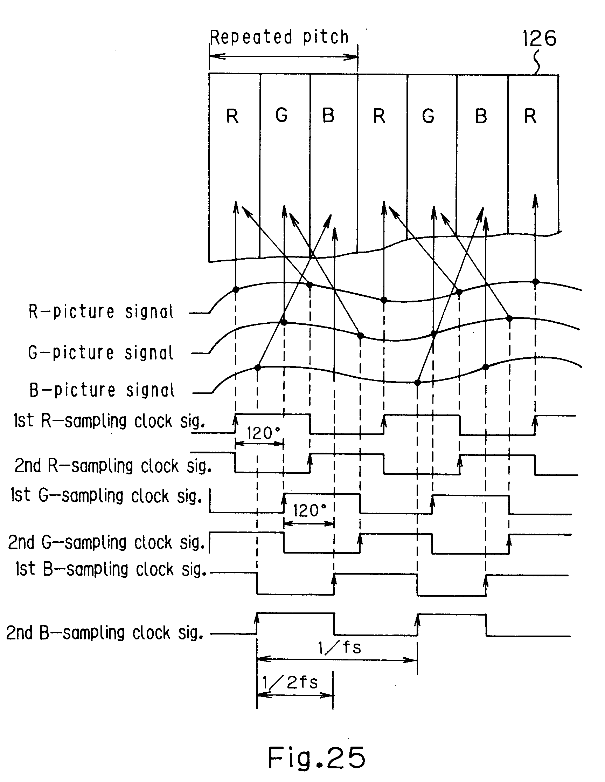

In this case, as shown in Fig. 25, the phases of the sampling clock signals for the RGB color signals are 120° out of phase mutually. Thus, the RGB picture signals are sampled at a position of 120° out of phase mutually and are displayed as the corresponding picture elements.

Fig. 25 is a schematic view showing RGB picture elements of the display device shown in Fig. 24 and sampling status of RGB picture signals.

Further, of the same picture elements, the picture signals sampled at the 120° out of phase between them, not the 180° out of phase, are displayed.

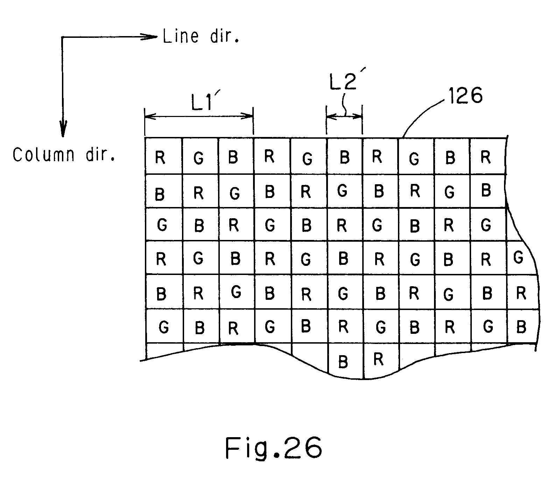

Accordingly, in this case, it is possible to obtain a smoother image having a higher resolution. In this embodiment for displaying a color picture, as the color filter, the RGB stripe filter is used, however, the color filter is not limited to that of the embodiment. For instance, a matrix color filter shown in Fig. 26 is also applicable, wherein the disposed order of the RGB having a repeated pitch L1' in the line direction is shifted in succession by one stripe width L2' with respect to the next line extending in the line direction. In short, the disposed order of the RGB is not limited to that of this embodiment.

Fig. 26 is a plan view showing the above RGB filter.

When employing an LCD for displaying an image by controlling the polarization of a light, it will require a polarizing plate and a wave plate to detect the modulation of the light.

Next, the description is given of an embodiment of an image display apparatus employing the display device for color pictures.

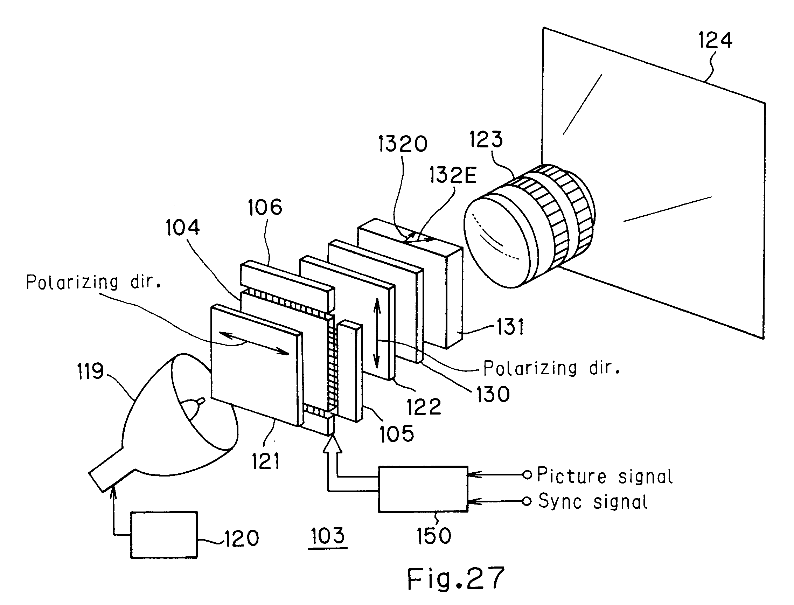

Fig. 27 is a perspective view showing an image display apparatus employing the display device for color pictures, wherein there is used a birefringence plate for shifting a position of a picture by 1/2 repeated pitch of the RGB filter.

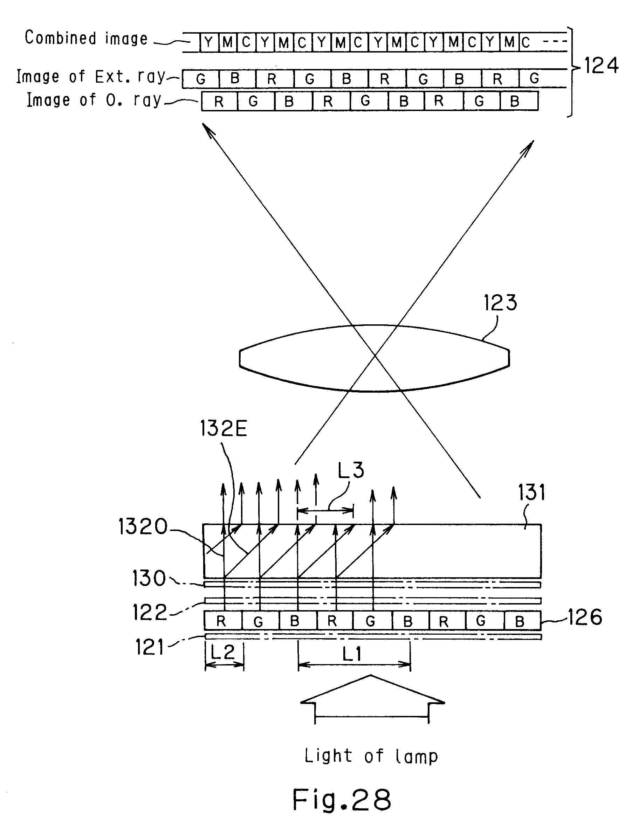

Fig. 28 is a schematic view for explaining the operation of the image display apparatus shown in Fig. 27.

The same parts shown in Fig. 21 are denoted with the same reference characters, and the descriptions thereof are omitted here.

At the both sides of the liquid crystal display section 104 of the display device 103, there are respectively disposed the first polarizing plate 121 and the second polarizing plate 122, having different polarizing directions from each other, i.e., 90 ° apart as mentioned in Fig. 21. At the output side of the second polarizing plate 122, there is disposed a wave plate 130 for converting a polarized light to a circularly polarized light, a birefringence plate 131 for establishing a displaced distance of 1/2 L1' between an ordinary ray and an extraordinary ray of the birefringence plate 131, where L1' is a repeated pitch (or a repetition ) of the RGB as shown in Fig. 26.

Thus, the output light therefrom is projected to a screen 124 by the projection lens 123. The abovementioned birefringence plate 131 has a function of a light lowpass filter.

According to this construction, the light carrying picture information from the display device 103 is polarized by the operations of the first and second polarizing plates 121, 122, and the polarized state of the light is outputted as an intensity modulated light. As shown in Fig. 28, the light passing through the RGB filter 126 is converted to the circularly polarized light (containing both vertically polarized light and horizontally polarized light) by the wave plate 130. Then this light is inputted to the birefringence plate 131, wherein the light is separated into two lights, i.e., the ordinary ray 1320 and the extraordinary ray 132E. Specifically, the horizontally and vertically polarized lights are respectively separated to the ordinary and extraordinary rays, 1320, 132E.

At that time, the thickness of the birefringence plate 131 is established that the displaced distance (optical path difference) from the ordinary ray 1320 to the extraordinary ray 132E is made to be 1/2 of the repeated pitch L1' of the RGB filter 126 or 1.5 times as large as the stripe width L2'.

Thus, the image by the ordinary ray 1320 and the extraordinary 132E are respectively projected on the screen 124 by being shifted at 1/2 of the repeated pitch L1' of the RGB filter 126. As a result, these images are observed as a combined image including YMC colors, each having a 1/2 width of the stripe width L2', wherein "Y" denotes yellow, "M" magenta and "C" cyan.

As mentioned above, the image observed on the screen has a pitch of 1/2 of the stripe width L2' of the color filter. This contributes to substantially improve the picture quality of the image thereon.

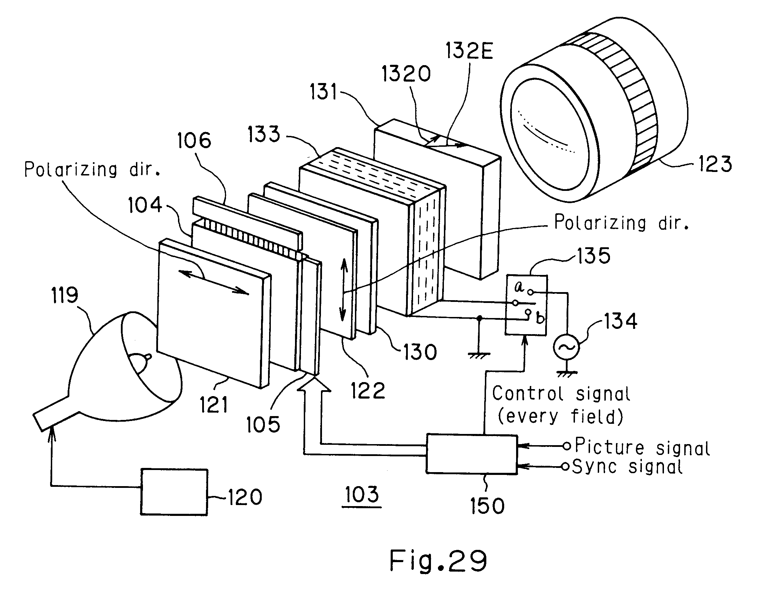

Fig. 29 is a perspective view showing a modification of the embodiment of the image display apparatus shown in Fig. 27, wherein the image display apparatus is provided with a polarizing direction switching shutter section.

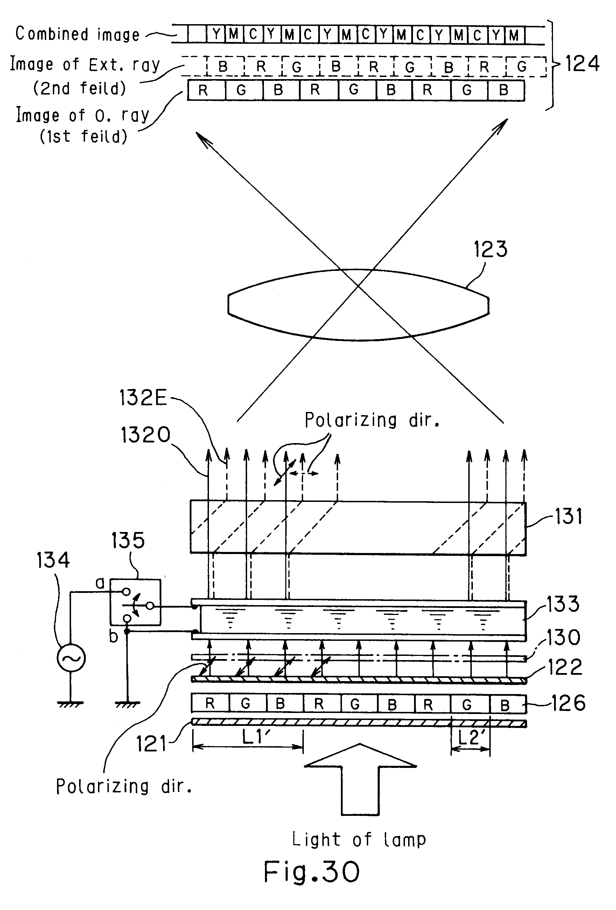

Fig. 30 is a schematic view for explaining the operation of the image display apparatus shown in Fig. 29.

Specifically, a polarizing direction switching shutter section 133 (referred to as switching shutter section hereinafter) such as a liquid crystal shutter is provided between the birefringence plate 131 and the wave plate 130.

The polarizing direction of the polarized light passing through the switching shutter section 133 is selectively rotated by 90°.

In order to switch the polarizing direction, the switching shutter section 133 composed of, for instance, a liquid crystal is connected to a switch 135 for switching the shutter 133 to the ground or to an AC power source 134. This switching shutter 133 is controlled to select "a" or "b" position (referred to a-side or b-side) of the switch 135, for instance, at every field by a driving circuit 150.

In this case, the light from the light source 119 is optically modulated by the liquid crystal display section 104 having the RGB filter 126. The light passing through the second polarizing plate 122 has only a predetermined polarized component. When the a-side is selected in the switch 135, this light impinging on the switching shutter section 133 passes therethrough without the rotation of the polarizing component. When the b-side is selected in the switch 135, this light impinging on the switching shutter section 133 passes therethrough being rotated at 90° with respect to the polarizing direction thereof.

The light outputted from the switching shutter section 133 impinges on the birefringence plate 131. Thus, the light is separated into two light, i.e., the ordinary ray 1320 and the extraordinary ray 132E, and they are projected on the screen 124. As a result, the image of YMC colors having a quasi-resolution equivalent to a pitch of 1/2 of stripe width L2' of the color filter is observed on the screen 124. This contributes to substantially improve the picture quality of the image thereon as mentioned in the foregoing.

In the abovementioned embodiments, the description is given of an example of the transmission type display device having the liquid crystal display section, however, the reflection type display device is also applicable in these embodiments.

Further, the birefringence plate is required to be disposed between the filter and the projection lens irrespective of being contacted on the filter or not.

As the birefringence plate a crystal plate can be employed, however, a mica plate or a polycarbonate plate are also applicable instead of the crystal plate.

This image display apparatus can be easily modified to a direct-view type image display apparatus, not the projection type one, wherein the user directly views the filter through the birefringence plate without the objective lens.

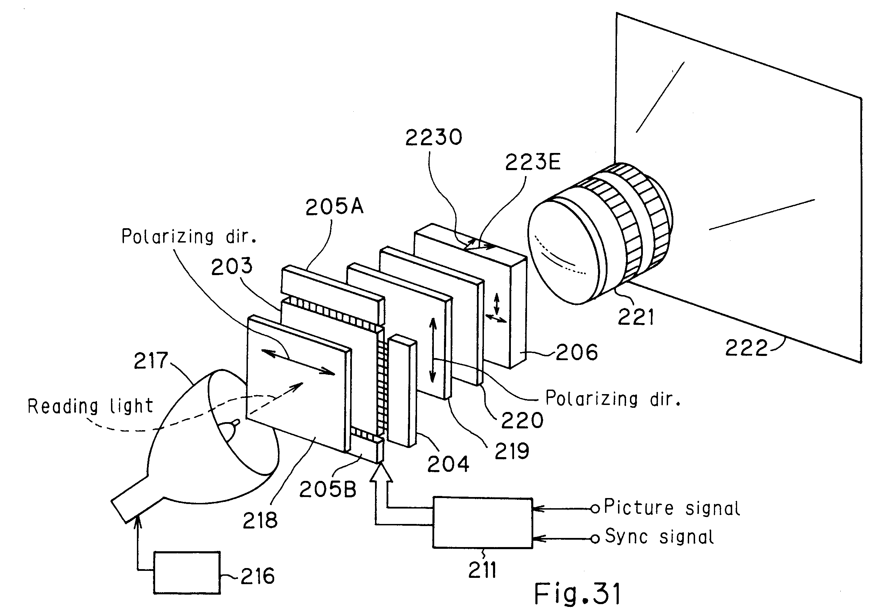

A description is given of another modification of the display device of the present invention and an image display apparatus employing the above another modification of the display device referring to Figs. 31 to 33.

Fig. 31 is a schematic view of another modification of the image display apparatus employing another modification of the display device as a picture processing device.

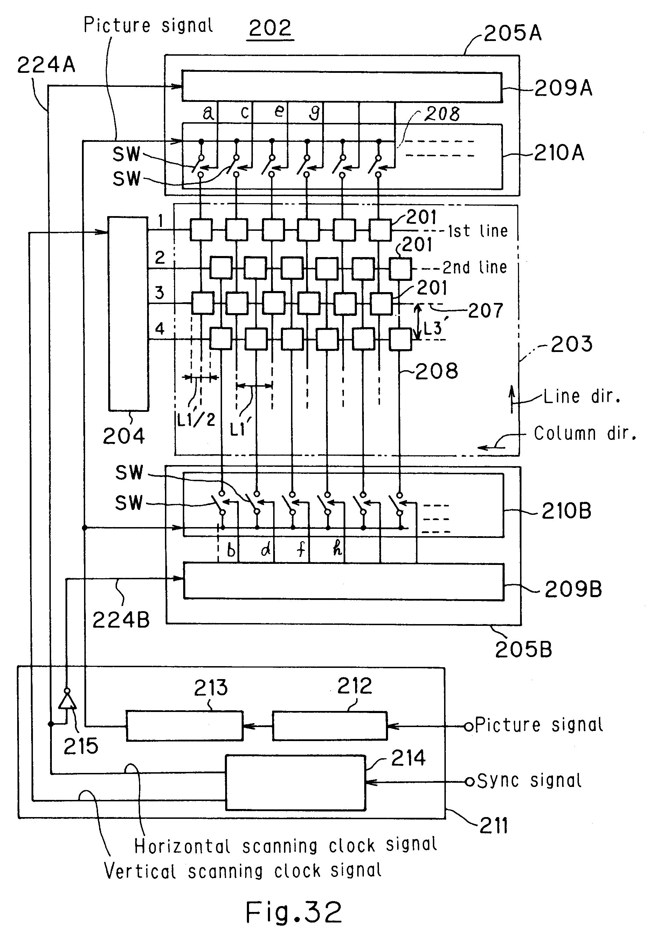

Fig. 32 is a block diagram of the display device as the image processing device shown in Fig. 31.

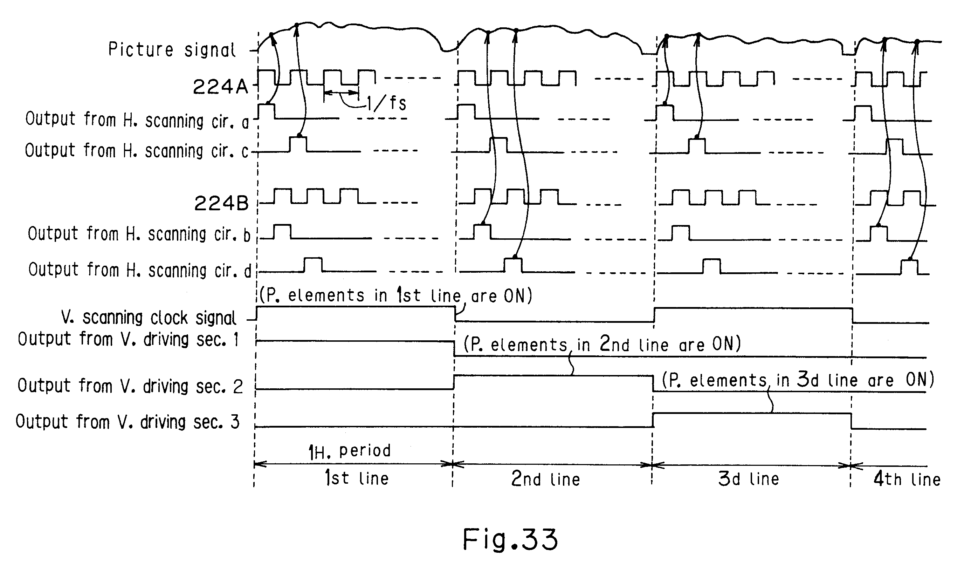

Fig. 33 is a timing chart for explaining an operation of the display device shown in Figs. 31, 32.

First, a description is given of a construction of a display device 202 referring to Fig. 32.

As shown in Fig. 32, the display device 202 mainly comprises a liquid display section 203 having a plurality of picture elements 201, a vertical driving section 204 for applying scanning signal to the picture elements 201, first and second horizontal driving sections 205A, 205B for applying sampled picture signals to the picture elements 201 and an optical lowpass filter 206 (Fig. 31) which is one of the main structural features of the present invention.

The liquid display section 203 has a plurality of the picture elements 201 in a matrix state in a line direction or a horizontal direction and in a column direction or in a vertical direction. In the same manner as shown in Fig. 44, the picture elements extending in a column direction are staggered every other element by 1/2 of a picture element pitch L1' in the line direction, resulting in forming a delta matrix.

The picture elements 201 disposed in the line direction are connected to scanning lead lines 207 for supplying a scanning signal at every line of picture elements 201, and all the picture elements 201 aligned in line in the column direction are connected to signal lead lines 208 for supplying a picture signal to every column of the picture elements 201 as shown.

First group of the signal lead lines 208 is connected to a first horizontal driving section 205A and a second group of the signal lead lines 208 is connected to a second horizontal driving section 205B. The first and second groups of the signal lead lines 28 are alternately disposed each other in the horizontal direction.

Each of the first and second horizontal driving sections 205A, 205B comprises a horizontal scanning circuit 209A, (209B) composed of, for example, a shift register for latching sampling clock signals sequentially therein as mentioned hereinafter, and an analogue switch group 210A, (210B) having a plurality of switches SW, respectively.

Upon an operation of the display device 202, the picture signals inputted are sampled by scanning and switching the analogue switches SW sequentially under the control of the first and second horizontal scanning circuits 209A, 209B.

In other words, the picture signals are sequentially fed to the picture signal terminal lines which are disposed in parallel in the line direction, by turning on the switches SW sequentially in sync with the sampling clock signal. In the example of the ninth embodiment shown in Fig. 32, the odd field picture lines a, c, e, g ··· are sequentially switched by the first horizontal driving circuit 209A, and the even field picture lines b, d, f··· are sequentially switched by the second horizontal driving circuit 209B.

The vertical driving section 204 is composed of a vertical shift register, and feeds a scanning signal to the scanning lead lines 207 disposed in parallel in the line direction. Thus, a transistor corresponding to a picture element turns on by the scanning signal through the scanning lead line, resulting in a response of liquid crystal in accordance with the scanning signal.

A driving circuit 211 for driving the first and second horizontal driving sections 205A, 205B and the vertical driving section 204 has a processing circuit 212 for receiving a picture signal and processing it in a predetermined form and a driving amplifier 213 for amplifying the picture signal and outputting it to the analogue switches SW. Further, the driving circuit 211 has a clock signal generating section 214 for generating a horizontal scanning clock signal and a vertical scanning clock signal responsive to a sync signal supplied thereto.

In the processing circuit 212, the picture signal inputted thereto undergoes necessary signal processing such as γ-compensation, and is converted to a signal form suitable to the operation of the liquid crystal. The horizontal scanning clock signal outputted is divided into two clock signals, and one of them is directly inputted to the first horizontal driving section 205A as a first sampling clock signal. Another clock signal which has undergone a phase reversal of 180° caused by an inverter 215 is inputted to the second horizontal scanning circuit 209B of the second horizontal driving section 205B as a second sampling clock signal. Thus, it is noted that the first and second sampling clock signals are 180° out of phase from each other.

The above image display device is applied to the first image projecting device shown in Fig. 31, wherein a reference character 216 represents a power source, 217 a lamp connected to the power source 216 by being positioned nearby a liquid crystal display section 203 through a first polarizing plate 218 interposed between the liquid crystal display section 203 and the lamp 217. Thus, the first polarizing plate 218 is positioned at an incident light side of (reading light side ) of the liquid crystal display section 203, so that the polarizing direction of the incident light thereof accords with, for instance, the vertical direction.

At another side of the liquid crystal display section 203, the second polarizing plate 219 is positioned, so that the polarized state of the transmitting light from the liquid crystal display section 203 is detected as an intensity modulated light of information. To make it short, the first and second polarizing plates 218, 219 are positioned in a relation of a crossed Nicol or a parallel Nicol to each other.

At the output side of the second polarizing plate, there are disposed a wave plate 220, an optical filter (not shown), an objective lens 221 and a screen 222 along an optical path in this order.

The wave plate 220 converts the vertical polarized light having two components which are vertical to each other, into a circularly polarized light (containing vertically and horizontally polarized lights). The optical lowpass filter 206 which is one of the constructive features of the present invention, separates the circularly polarized light inputted from the wave plate 220 into an ordinary ray 2230 and an extraordinary ray 223E. The objective lens 221 projects both the ordinary ray 2230 and the extraordinary ray 223E on the screen 222.

As the optical lowpass filter 206, a birefringence plate such as a crystal plate, a mica plate, a polycarbonate plate is used. The thickness of the birefringence plate is determined so as to satisfy a positional relation between the ordinary ray 2230 and the extraordinary ray 223E as an image displayed on the screen 222 by the ordinary ray 2230 is displaced from an image displayed on the screen 222 by the extraordinary ray 223E at a distance corresponding to a picture element pitch L3' (Fig. 32) in the column direction.

Thereby, it is possible to overlay, for instance, the image displayed by the extraordinary ray 223E on the image by the ordinary ray 2230 in a displayed state by the pitch L3' in the column direction on the screen 222.

Next, a description is given of the operation of the ninth embodiment of the image projection device, referring to Figs. 32 and 33.

The vertical driving section 204 feeds the scanning signal to each of the scanning lead lines 207 in a cyclic manner defined by a vertical scanning clock signal. These are denoted as vertical driving outputs 1, 2, 3··· . The first and second horizontal driving section 205A, 205B sequentially turns on the switches SW of the first and second analogue switch groups 210A, 210B, respectively. The ON-state is denoted as horizontal scanning circuit outputs a, c··· , b, d,··· in Fig. 33.

Further, after the picture signal has undergone the necessary processing such as the γ-compensation by the processing circuit 212, the picture signal is converted into a signal form suitable to the liquid crystal display section 203, and is inputted to the first and second analogue switch groups 210A, 210B.

The first and second sampling clock signals 224A and 224B are in a relation of 180° out of phase from one another. Thus, when each of the first and second horizontal scanning circuits 209A, 209B is driven thereby, the output from the horizontal scanning circuits 209A, 209B become a, c, e, g··· , b, d, f, h··· , respectively. During these outputs, the analogue switches SW are turned on, thus, the picture signal is fed to each of the signal lead lines 208. At that time, the vertical driving section 204 turns on the scanning terminal lines during one scanning line period. Thus, the picture signal is fed to each of the picture elements 201, resulting in the entire image displayed on the liquid crystal display section.

Referring to Fig. 31 again, in the process of forming the entire image on the liquid crystal display section 203, the read light emitted from the lamp 217 is polarized in the horizontal direction by the first polarizing plate 218.
This polarized light is inputted to the liquid crystal display section 203 and is outputted therefrom being modulated according to the above image information written therein. The modulated outputted light is incident on the second polarizing plate 219, and is outputted as a vertically polarized light therefrom. Thus, the polarized state of the light is taken out as an intensity modulated light. Further, this light is incident on the wave plate 220, and is converted to a circularly polarized light containing both a horizontally polarized light and a vertically polarized light. The circularly polarized light is inputted to the optical lowpass filter 206 composed of a birefringence plate, wherein the horizontally and vertically polarized lights are separated as an ordinary ray and an extraordinary ray, respectively. Each of these rays is projected by the objective lens 221 on the screen, resulting in a overlaid image of the ordinary and extraordinary rays.

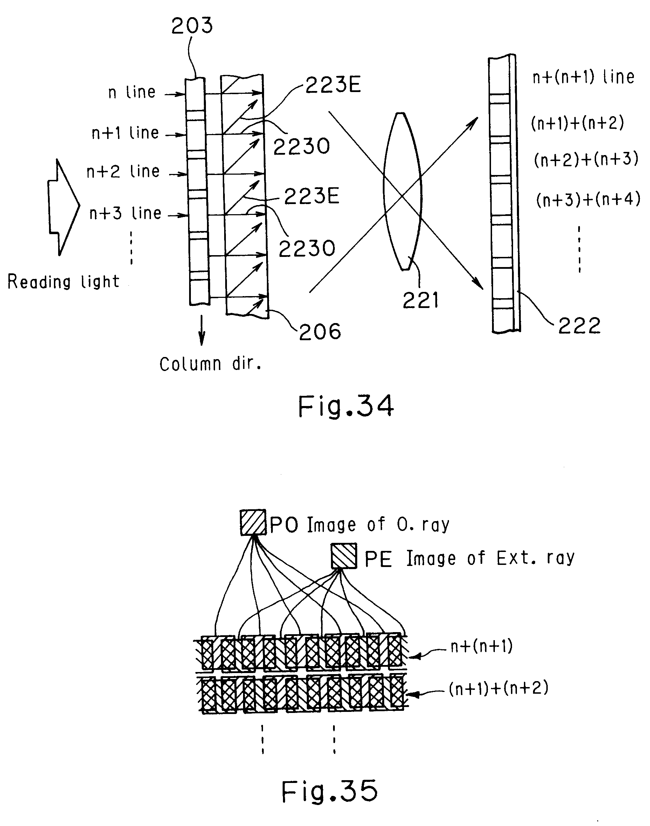

This state is shown in Figs. 34 and 35.

Fig. 34 is a schematic view for explaining the operation of the image display apparatus of the ninth embodiment of the present invention shown in Fig. 31.

Fig. 35 is a schematic view showing the overlaid state of an ordinary ray and an extraordinary ray.

In these Figs. 34 and 35, the polarizing plates and the wave plate are omitted for simplicity.

As shown in Fig. 34, when the light from the liquid crystal section 203 has passed the lowpass filter means 206, for instance, the extraordinary ray 223E is displaced by a distance L3' (Fig. 32) which corresponds to one pitch of the picture element in the column direction. Thus, the images formed by the ordinary ray 2230 and the extraordinary ray 223E are focused on the screen 222 by being overlaid in a displaced state of one pitch in the column direction.

In Fig. 35, images PO formed by the ordinary ray 2230 on the *n*-th line and (*n+1*)-th line, and image PE formed by the extraordinary ray on the (*n+1*)-th line and (*n+2*)-th line are respectively overlaid on the screen 222.

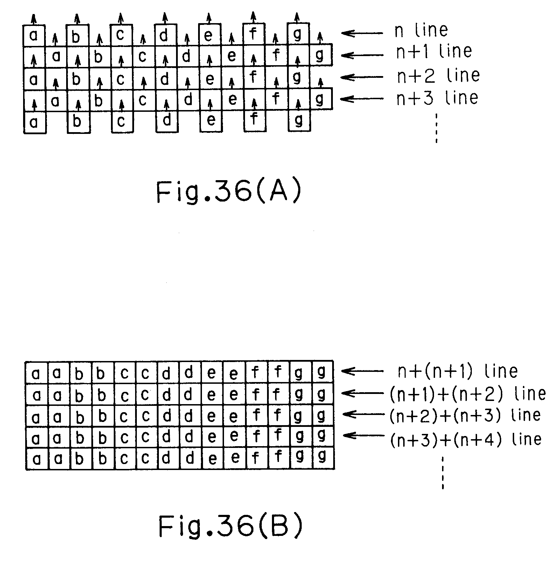

Figs. 36 (A) and 36(B) are schematic diagrams for further explaining in detail the displaced state of the images shown in Fig. 35, wherein Fig. 36(A) shows a displayed state in the prior art without using the lowpass filter 206 of the present invention, and Fig. 36(B) shows a displayed state in the present invention using the lowpass filter 206.

As seen from Figs. 36 (A) and 36(B), non-picture-information-sections between adjacent pixels on each of the lines are interpolated with pixels of the adjacent line on the screen in the preset invention.

As mentioned in the foregoing, according to the present invention it is possible to interpolate a space between the adjacent pixels in a certain line with picture information of an adjacent line, i.e., an upper line or a lower line of the certain line, by overlaying the image formed by the extraordinary ray in the adjacent line to the image formed by the ordinary ray in the certain line on the screen. In summary, according to the present invention it is possible to obtain a smooth image having no stepwise zigzag lines each corresponding to a counter of the picture element by interpolating a space having no picture information between the pixels with other pixel.

The ninth embodiment is explained about an example of displaying a monochromatic picture, however, this invention is applicable to displaying a color picture.

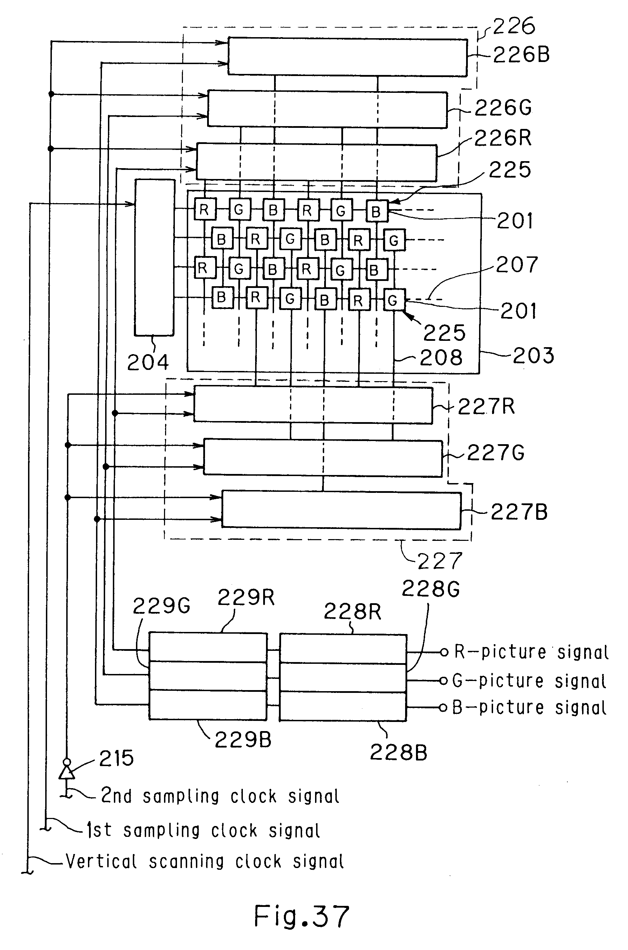

Fig. 37 is a block diagram of a display device as a picture processing device for a color picture in the present invention, wherein the like parts shown in Fig. 32 are represented by the like reference characters and the detailed description of the same parts is omitted here.

The display device for displaying a color picture has the same construction as that of the embodiment shown in Fig. 32 except for that the horizontal driving section is composed of three blocks corresponding to RGB (red, green, blue) colors, and that an RGB filter is provided.

As shown in Fig. 37, the liquid crystal display section 203 has a plurality of RGB filter 225 which are disposed in a matrix state in the line direction and in the column direction corresponding to each of RGB picture elements, wherein the "RGB" forms one block.

In these RGB filters 225, the "RGB" is cyclically disposed in the line direction, and in the column direction the same color filter is repeatedly disposed in line. It is noted that the RGB picture elements are disposed at the same positions as those of the RGB filters 225.

Specifically, for color picture display the picture elements 201 are aligned in the line direction and in correspondence with the "RGB" filter 225. Further, at every other line the picture elements 201 with "RGB" filters 225 are displaced in the line direction by a distance equal to 1/2 of "RGB" repeated pitch in the line direction. At that time, each of the RGB filters 225 is disposed to face each of the picture elements 201.

The first horizontal driving section 226 is composed of first R, G and B horizontal driving sections 226R, 226G and 226B. The first R-horizontal driving section 226R is connected to the R-picture elements disposed in the column direction at every other line, and the first G-horizontal driving section 226G is connected to the G-picture elements disposed in the column direction at every other line and the first B-horizontal driving section 226B is connected to the B-picture elements disposed in the column direction at every other line.

The second horizontal driving section 227 is composed of second R, G, and B horizontal driving sections 227R, 227G and 227B. The second R-horizontal driving section 227R is connected to the R-picture elements disposed in the column direction at another every other line, and the second G-horizontal driving section 227G is connected to the G-picture elements disposed in the column direction at another every other line and the second B-horizontal driving section 227B is connected to the B-picture elements disposed in the column direction at another every other line.

Accordingly, both the process circuits and the driving amplifiers are respectively provided individually for 3 colors, i.e., an R-processing circuit 228R, an R-driving amplifier 229R, a G-processing circuit 228G, a G-driving amplifier 229G, a B-processing circuit 228B and a B-driving amplifier 229B because R, G, B picture signals are individually applied to R-, G-, B-processing circuits 228R, 228G, 228B. And, first and second R, G, B driving sections 226 R,G,B and 227 R,G,B are connected to R,G,B driving amplifiers 229 R, G, B by corresponding colors.

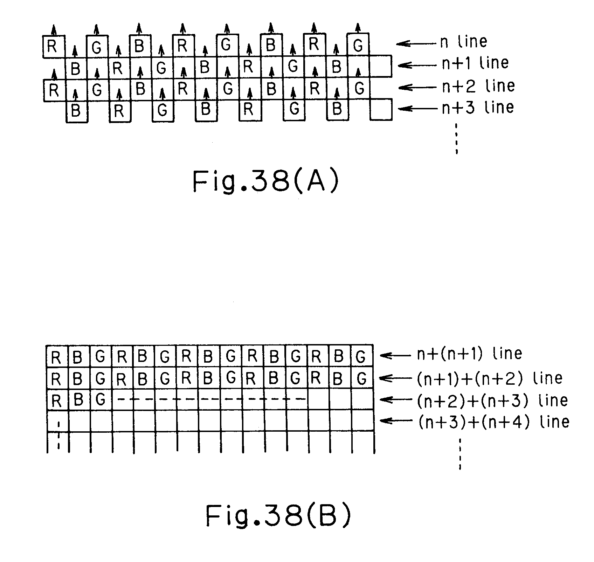

Figs. 38(A) and 38(B) are schematic views showing a status of a picture displacement in a color display.

In the displaying apparatus of the prior art, there are developed blank spots having no picture information between the picture elements as shown in Fig. 38(A) when such RGB filters are provided. However, in this embodiment the image formed by the extraordinary ray is overlaid on the image formed by the ordinary ray in the displaced state (indicated by arrows in Fig. 36(A)) of 1/2 picture element pitch in the column direction as explained before and shown in Fig. 38(B). Thus, it is is possible to obtain a smooth image having no stepwise zigzag lines by filling blank spots by other pixels by interpolation. The above relation is the same when the ordinary ray is displaced instead of the extraordinary ray.

In this embodiment, each of the picture elements having a square shape is disposed so that sides thereof are parallel or vertical in the line direction. However, it is not limited to the embodiment.

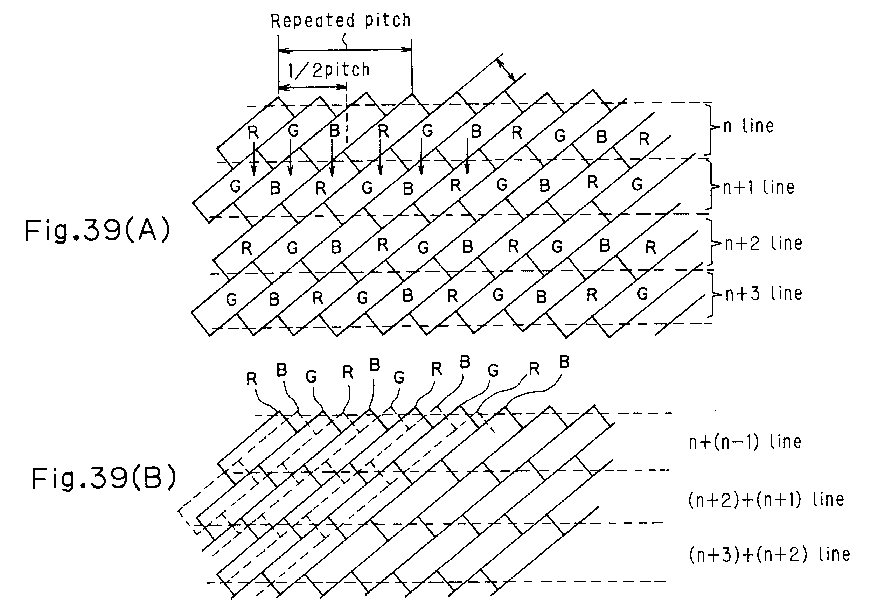

Fig. 39(A) is a schematic view of another embodiment of the RGB filter.

Fig. 39(B) is a schematic view for explaining the operation of another embodiment of the RGB filter shown in Fig. 39(A).

As shown in Figs. 39(A), in this embodiment a plurality of RGB picture elements 201 each having a rectangular shape are obliquely disposed with respect to a scanning direction, and a plurality of RGB filters 225 each having the same rectangular shape as that of each of the RGB picture elements 201 are also provided on the RGB picture elements. In this case, upon projecting the image on the screen 222, an image formed by either the ordinary ray or the extraordinary ray is displaced by a distance equal to a color stripe width L4' of the RGB filter 225 in the column direction as shown in Fig. 39(B). Then, the image depicted with solid lines, which is not displaced, is overlaid to the image depicted with dotted lines, which is displaced. Thus, it is possible to obtain a smooth picture without exhibiting zigzag lines by interpolating the blank spots between adjacent pixels by the image information of either an upper line or a lower line.

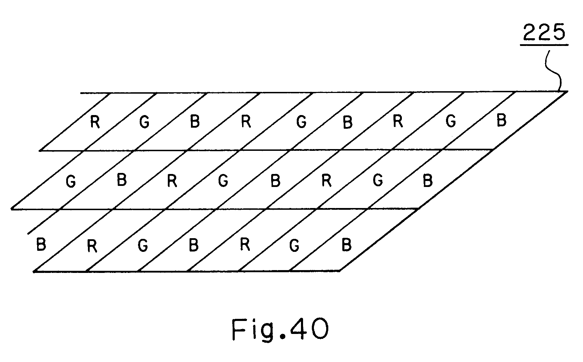

The shapes of each of the picture elements and each of the RGB filter are not limited to the rectangular ones. For instance, the picture elements each having a diamond shape and the RGB filter 225 having the corresponding diamond shape are also applicable as shown in Fig. 40.

Fig. 40 is a schematic view showing picture elements each having a diamond shape and a RGB filter having the corresponding diamond shape.

Further, the optical lowpass filter is not necessary to directly contact with the RGB filters and picture elements but is placed between the objective lens and either the RGB filter or the picture elements.

When this invention is applied to a direct-view type apparatus, not a projection type apparatus, the objective lens is omitted there. In this case, the user can directly see the image through the optical lowpass filter.

Needless to say, the present invention is applicable to a case where a relation between the lines and columns in the matrix is inverted.

## Claims

1. An image display apparatus comprising:
picture display means having a plurality of picture elements disposed in a matrix state for displaying a picture responsive to a picture signal supplied thereto;
polarizing means for selectively changing a plane of polarization of a light of the picture displayed by the picture display means; and
birefringence means for causing birefringence in the light outputted from the polarizing means,
wherein the picture display means, the polarizing means and the birefringence means are disposed in this order along a path of a light.

2. An image display apparatus comprising:
liquid crystal picture display means having a plurality of picture elements disposed in a matrix state for displaying a picture responsive to a picture signal supplied thereto;
vertical scanning signal driving means for sequentially applying a vertical scanning signal to each of the plurality of picture elements;
horizontal scanning signal driving means for sequentially applying a picture signal synchronized with a horizontal scanning signal to each of the plurality of picture elements;
polarizing means for selectively changing a plane of polarization of a light of the picture displayed by the liquid crystal picture display means; and
birefringence means for causing birefringence in the light outputted from the polarizing means,
wherein the liquid crystal picture display means, the polarizing means and the birefringence means are disposed in this order along a path of a light.

3. An image display apparatus as claimed in claim 1 further comprising a lenticular lens in the path of the light for 3-dimensional picture display.

4. An image display apparatus as claimed in claim 2 further comprises a lenticular lens in the path of the light for 3-dimensional picture display.

5. An image display apparatus comprising:
liquid crystal picture display means having a plurality of picture elements disposed in a matrix state for displaying a picture responsive to a picture signal supplied thereto;
vertical scanning signal driving means for sequentially applying a vertical scanning signal to each of the plurality of picture elements;
horizontal scanning signal driving means for sequentially applying a picture signal synchronized with a horizontal scanning signal to each of the plurality of picture elements;
polarizing means for selectively changing a plane of polarization of a light of the picture displayed by the liquid crystal picture display means; and
image processing means comprising a beam splitter for causing a P-polarized light of an inputted light to pass through and reflecting an S-polarized light thereof, reflecting means for reflecting the P-polarized light and the S-polarized light from the beam splitter, and polarizing means for respectively converting the S-polarized light and the P-polarized light reflected by the reflecting means to the P-polarized light and the S-polarized light, and directing thus converted P and S polarized lights to the beam splitter,
wherein the liquid crystal picture display means, the polarizing means and the birefringence means are disposed in this order along a path of the light.

6. An image display apparatus having liquid crystal picture display means having a plurality of picture elements in a matrix form aligned straight in both line and column directions for displaying a picture responsive to a picture signal supplied thereto, vertical scanning signal driving means for sequentially applying a vertical scanning signal to each of the plurality of picture elements and horizontal scanning signal driving means for sequentially applying to the plurality of picture elements a picture signal sampled at a rate which corresponds to picture elements disposed in the line direction, the image display apparatus comprising:
sampling clock generating means for generating first and second sampling clock signals which are 180° out of phase to each other;
sampling clock switching means for selectively switching the first and second sampling clock signals and applying one of the first and second sampling clock signals to the horizontal scanning signal driving means, and
switching control means for controlling the sampling clock switching means so as to switch the first and second sampling clock signals at a predetermined repetition rate,
wherein the picture display means, the polarizing means and the image processing means are disposed in this order along a path of the light.

7. An image processing device as claimed in claim 6, wherein the switching control means controls the sampling clock switching means so as to switch the first and second sampling clock signals at every vertical scanning cycle of the picture signal.

8. An image processing device as claimed in claim 6, wherein the switching control means controls the sampling clock switching means so as to switch the first and second sampling clock signals at every horizontal scanning cycle of the picture signal and to switch the first and second sampling clock signals at every vertical scanning signal cycle additionally.

9. An image processing device having liquid crystal picture display means having a plurality of picture elements in a matrix form aligned straight in both in line and column directions and a plurality of RGB color filters correspondingly provided to the plurality of picture elements, and vertical scanning signal driving means for sequentially applying a vertical scanning signal to each of the plurality of picture elements and horizontal scanning signal driving means for sequentially applying to the plurality of picture elements a picture signal sampled at a rate which corresponds to picture elements disposed in the line direction, the image processing device comprising:
sampling clock generating means for generating first and second sampling clock signals which are 180° out of phase therebetween;
sampling clock switching means for selectively switching the first and second sampling clock signals and applying one of the first and second sampling clock signals to the horizontal scanning signal driving means, and
switching control means for controlling the sampling clock switching means so as to switch the first and second clock sampling clock signals at a predetermined repetition rate.

10. An image processing device as claimed in claim 9, wherein the switching control means controls the sampling clock switching means so as to switch the first and second sampling clock signals at every vertical scanning cycle of the picture signal.

11. An image processing device as claimed in claim 10, wherein the switching control means controls the sampling clock switching means so as to switch the first and second sampling clock signals at every horizontal scanning cycle of the picture signal and to switch the first and second sampling clock signals at every vertical scanning signal cycle additionally.

12. An image processing device as claimed in claim 9 further comprising a birefringence plate for separating the light from the liquid crystal display device into an ordinary ray and an extraordinary ray so as to be separated to each other at a distance corresponding to 1/2 of a repetition pitch of the RGB color filters and polarization switch means interposed between the liquid crystal picture display means and the birefringence plate for switching a polarizing direction of a light inputted thereto at a vertical scanning cycle of the picture signal.

13. An image processing device as claimed in claim 10 further comprising a birefringence plate for separating the light from the liquid crystal display device into an ordinary ray and an extraordinary ray so as to be separated to each other at a distance corresponding to 1/2 of a repetition pitch of the RGB color filters and polarization switch means interposed between the liquid crystal picture display means and the birefringence plate for switching a polarizing direction of a light inputted thereto at a vertical scanning cycle of the picture signal.

14. An image processing device as claimed in claim 11 further comprising a birefringence plate for separating the light from the liquid crystal display device into an ordinary ray and an extraordinary ray so as to be separated to each other at a distance corresponding to 1/2 of a repetition pitch of the RGB color filters and polarization switch means interposed between the liquid crystal picture display means and the birefringence plate for switching a polarizing direction of a light inputted thereto at a vertical scanning cycle of the picture signal.

15. An image display apparatus as claimed in claim 1, wherein the picture signal includes RGB color picture signals and the picture elements are RGB color picture elements corresponding to RGB color picture signals respectively, the RGB color picture elements forming a plurality of RGB color groups disposed repeatedly with a repetition pitch along a line direction, a line of the RGB color picture elements is displaced every other line by a distance corresponding to 1/2 of a repetition pitch, and RGB color filters are provided correspondingly with the RGB color picture elements.

16. An image display apparatus as claimed in claim 2, wherein the picture signal includes RGB color picture signals and the picture elements are RGB color picture elements corresponding to RGB color picture signals respectively, the RGB color picture elements forming a plurality of RGB color groups disposed repeatedly with a repetition pitch along a line direction, a line of the RGB color picture elements is displaced every other line by a distance corresponding to 1/2 of a repetition pitch, and RGB color filters are provided correspondingly with the RGB color picture elements.

17. An image display apparatus as claimed in claim 5, wherein the picture signal includes RGB color picture signals and the picture elements are RGB color picture elements corresponding to RGB color picture signals respectively, the RGB color picture elements forming a plurality of RGB color groups disposed repeatedly with a repetition pitch along a line direction, a line of the RGB color picture elements is displaced every other line by a distance corresponding to 1/2 of a repetition pitch, and RGB color filters are provided correspondingly with the RGB color picture elements.

18. An image display apparatus as claimed in claim 15, wherein the RGB color filters are in a form of a plurality of stripes inclined with respect to the line direction, and each of the RGB color picture elements is inclined correspondingly with the stripes of the RGB filter.

19. An image display apparatus as claimed in claim 16, wherein the RGB color filters are in a form of a plurality of stripes inclined with respect to the line direction, and each of the RGB color picture elements is inclined correspondingly with the stripes of the RGB filter.

20. An image display apparatus as claimed in claim 17, wherein the RGB color filters are in a form of a plurality of stripes inclined with respect to the line direction, and each of the RGB color picture elements is inclined correspondingly with the stripes of the RGB filter.

21. An image display apparatus as claimed in claim 6, wherein the picture elements are RGB picture elements corresponding to RGB color picture signals respectively, the RGB color picture elements forming a plurality of RGB color groups disposed repeatedly with a repetition pitch along a line direction, a line of the RGB color picture elements is displaced every other line by a distance corresponding to 1/2 of a repetition pitch and RGB color filters are provided correspondingly with the RGB color picture elements.

22. An image display apparatus as claimed in claim 9, wherein the picture elements are RGB picture elements corresponding to RGB color picture signals respectively, the RGB color picture elements forming a plurality of RGB color groups disposed repeatedly with a repetition pitch along a line direction, a line of the RGB color picture elements is displaced every other line by a distance corresponding to 1/2 of a repetition pitch and RGB color filters are provided correspondingly with the RGB color picture elements.

23. An image display apparatus as claimed in claim 21, wherein the RGB color filters are in a form of a plurality of stripes, and each of the RGB color picture elements is inclined correspondingly with with the stripes of the RGB color filters.

24. An image display apparatus as claimed in claim 22, wherein the RGB color filters are in a form of a plurality of stripes, and each of the RGB color picture elements is inclined correspondingly with with the stripes of the RGB color filters.

25. An image sensing apparatus comprising:
image sensing means for sensing an image;
birefringence means for causing birefringence in a light inputted to the image sensing means; and
polarizing means for selectively changing a plane of polarization of a light of the image inputted to the birefringence means, wherein the polarizing means and the birefringence means and the image sensing means are disposed in this order along a path of the light.

26. An image display apparatus comprising:
a display device having a plurality of picture elements in a matrix form aligned straight in both line and column directions;
a rotary disc in which a plural through holes are defined along a periphery of the rotary disc,
a first flat glass plate provided at least in one of the through holes for refracting an information light inputted to the rotary disc from the display device; and
a second flat glass plate provided at least in another the through holes for allowing to pass the information light inputted to the rotary disc without any refraction.

27. An image display apparatus comprising:
a display device having a plurality of picture elements in a matrix form aligned straight in both line and column directions;
a plain glass plate for allowing to pass an information light inputted thereto from the display device without causing any refraction; and
a piezoelectric element for inclining the plain glass plate so as to refract the information light.

28. An image display apparatus comprising:
first and second transmitting type display devices for respectively modulating first and second lights inputted thereto;
first and second polarizing means for selectively and respectively polarizing a polarization plane of the first and second lights outputted from the first and second transmitting type display devices; and
a polarizing beam splitter for passing a P-polarized components of the first and second lights respectively and for reflecting S-polarized components of the first and second light, respectively, the first and second lights being incident on the polarization beam splitter from different directions each other making a right angle there between.
